# EUROPÄISCHE PATENTSCHRIFT

(11) **EP 2 866 611 B1**
(45) Veröffentlichungstag und Bekanntmachung des Hinweises auf die Patenterteilung: **09.12.2020**
(21) Anmeldenummer: 13725916.4
(22) Anmeldetag: 17.05.2013
(51) Int. Cl.: A46D 3/00, A46B 3/00, B29C 45/26, B29C 45/33, A46B 1/00, A46B 5/00, A46B 9/12, A46D 1/00

(54) **HAUSHALTSBÜRSTE ODER KÖRPERPFLEGEBÜRSTE MIT GESPRITZTEN BORSTEN**
HOUSEHOLD BRUSH OR BODY CARE BRUSH COMPRISING INJECTED BRISTLES
BROSSE À USAGE DOMESTIQUE OU BROSSE POUR SOINS CORPORELS À POILS MOULÉS PAR INJECTION

(30) Priorität: 02.07.2012 EP 12004915
(43) Veröffentlichungstag der Anmeldung: 06.05.2015
(73) Patentinhaber: Trisa Holding AG, 6234 Triengen (CH)
(72) Erfinder: KIRCHHOFER, Roger, 5057 Reitnau (CH); KIRCHHOFER, Pierre, 6205 Eich (CH); SCHÄR, Michael, 6243 Egolzwil (CH)
(74) Vertreter: Schaad, Balass, Menzl & Partner AG
(86) Internationale Anmeldenummer: PCT/EP2013/001482
(87) Internationale Veröffentlichungsnummer: WO 2014/005662

(56) Entgegenhaltungen:
- WO-A1-02/03831
- CH-A- 274 736
- FR-A- 1 224 063
- GB-A- 806 145
- US-A- 2 783 490

## Beschreibung

Die vorliegende Erfindung betrifft eine Haushaltsbürste oder Körperpflegebürste gemäss Anspruch 1. Zahnbürsten fallen nicht unter den Begriff Körperpflegebürsten.

Haushaltsbürsten in Form von Spül- und Abwaschbürsten sind beispielsweise aus den Dokumenten DE 939 685, DE 940 891 und DE 1 951 132 bekannt. Sie weisen eine Handhabe in Form eines Stiels mit einem Spannkörper beziehungsweise einer Borstentragplatte auf, über welchen beziehungsweise welche ein flächiger, aus kautschuk- oder gummiartigem Material hergestellter Borstenträger gespannt ist. Von diesem stehen einzelne Borsten ab, welche integral mit dem Borstenträger hergestellt sind. Diese individuellen Borsten sind weich und sehr flexibel.

Die aus dem Dokument DE 1 951 132 bekannte Kunststoff-Spülbürste weist zusätzlich zu den weichen Borsten auch einen Topfkratzer auf. Dieser besteht aus verhältnismässig harten Kunststoffborsten, die in der Bürstentragplatte verankert sind. Hierzu bilden die Topkratzerborsten in der Wurzel ein prismenförmiges Halteteil, welches in eine eigens hierzu vorgesehene Ausnehmung in der Bürstentragplatte eingesetzt ist und auf der den Borsten abgekehrten Seite einen verbreiterten Rand besitzt, mit dem es nach Art eines Anschlags innenseitig an der Wand der Bürstentragplatte zur Anlage kommt.

Weiter sind aus den Dokumenten WO 94/04057 und AU 81 674/82 Haushaltsbürsten in Form von Besen bekannt, welche ebenfalls integral mit einem Borstenträger ausgebildete individuelle, von diesem abstehende gespritzte Borsten aufweisen.

US 2 783 490 offenbart eine Bürste mit Borsten, die einstückig mit einem Trägerelement vorgesehen sind. In dieser Offenbarung weisen die Borsten eine scharfe und in Längsrichtung laufende Kante auf.

WO 02/03831 offenbart Borstenwaren mit wenigstens einem Träger und daran angeordneten Borsten aus einem giessfähigen Kunststoff, die in der Weise hergestellt werden, dass der Träger mit nach Art von Spinndüsen wirkenden Durchbrüchen, an die sich borstenformende Kanäle anschließen, versehen wird und dass eine Kunststoffschmelze für die Borsten durch Spritzgiessen von mindestens einer Seite des Trägers - der Zuführseite der Schmelze - durch die Durchbrüche hindurch unter Bildung der Borsten in die Kanäle gespritzt wird.

Ausgehend von diesem Stand der Technik ist es eine Aufgabe der vorliegenden Erfindung, eine Haushaltsbürste oder Körperpflegebürste mit verbesserten Reinigungseigenschaften sowie ein Spritzgiesswerkzeug zu deren kostengünstigen Herstellung zu schaffen.

Diese Aufgabe wird mit einer Haushaltsbürste oder Körperpflegebürste mit den Merkmalen des Anspruchs 1 gelöst.

Die erfindungsgemässe Haushaltsbürste oder Körperpflegebürste weist eine Handhabe und ein von dieser getragenes Borstenfeld mit, im Spritzgiessverfahren hergestellten, gespritzten Borsten auf. Diese stehen von einem integral mit ihnen ausgebildeten Borstenträger ab. Jeweils mehrere gespritzte Borsten sind zu einem Borstenbündel zusammengefasst und die Borstenbündel sind in einem Bündelabstand zueinander angeordnet.

Jedes der Borstenbündel weist somit eine Vielzahl von dicht beieinander stehenden gespritzten Borsten auf. Der Bündelabstand ist ein Vielfaches grösser als der allfällige Abstand zwischen den gespritzten Borsten innerhalb des Borstenbündels.

Die erfindungsgemässe Haushaltsbürste oder Körperpflegebürste kann gegenüber den bekannten Haushaltsbürsten oder Körperpflegebürsten mit gespritzten Borsten eine viel grössere Dichte von gespritzten Borsten aufweisen, was zu einer verbesserten Anwendung mit verbessertem Reinigungs- oder auch Applikationseffekt führt.

Erfindungsgemäß ist der Querschnitt der gespritzten Borsten kreisrund.

In bevorzugter Weise verjüngt sich der Querschnitt der gespritzten Borsten vom Austritt aus dem Borstenträger in Richtung zum freien Ende hin, insbesondere kontinuierlich. Letzteres bedeutet, dass sich eine Konizität ausbildet. Bevorzugt weisen die gespritzten Borsten im Borstenbündel, gemessen beim Austritt aus dem Borstenträger, einen gegenseitigen Abstand von 0 mm bis höchstens 1,5 mm auf. Besonders bevorzugt beträgt der gegenseitige Abstand 0 mm bis 0,8 mm.

Erfindungsgemäß ist wenigstens einigen der Borstenbündel der Borstenträger gemeinsam. Besonders bevorzugt ist der Borstenträger allen Borstenbündeln gemeinsam.

Bei einer sehr günstig herstellbaren erfindungsgemässen Haushaltsbürste oder Körperpflegebürste ist der gemeinsame Borstenträger durch die Handhabe gebildet und bestehen die Handhabe sowie die gespritzten Borsten aus derselben Kunststoffkomponente. Wenn der Borstenträger allen Borstenbündeln gemeinsam ist, lässt sich eine derartige Haushaltsbürste oder Körperpflegebürste in einem einzigen Spritzgiessschritt komplett herstellen.

Der Borstenträger ist dementsprechend - in der oben genannten Ausführungsform - nicht als Schicht, sondern mehr als voluminöser Körper ausgebildet.

Das Material, das zur Formung der Haushalts- oder Körperpflegebürste aus einer einzigen Kunststoffkomponente verwendet wird, wird vorzugsweise auf Basis der Eigenschaften der gespritzten Borsten gewählt. Dabei kann es sein, dass diese Eigenschaften den nötigen Eigenschaften für die Formung einer konventionellen Handhabe nicht entsprechen. Deshalb kann es nötig sein, die Handhabe, im speziellen der Hals- und Griffbereich einer entsprechenden Haushaltsbürste oder Körperpflegebürste geometrisch so auszulegen, dass die nötigen beispielsweise Stabilitätseigenschaften trotzdem erreicht werden können. Ein zentraler Punkt dieser Gestaltung ist, dass die Entformung trotz aller Gestaltungsaspekte möglichst einfach erreicht ist.

Bei der vorgenannten Ausgestaltungsvariante ist es möglich, dass aus ergonomischen oder designtechnischen Gründen eine oder mehrere weitere Kunststoffkomponenten an die Handhabe oder auch das Borstenfeld angespritzt werden. Dabei können die Kunststoffkomponenten sowohl Weichkomponenten als auch Hartkomponenten sein.

Erfindungsgemäss sind bei der Haushaltsbürste oder Körperpflegebürste der gemeinsame Borstenträger und die Handhabe aneinander angespritzt. Erfindungsgemäss bilden der gemeinsame Borstenträger und die Handhabe mindestens einen Formschluss und weiter bevorzugt ebenfalls einen Materialschluss aus.

Entweder ist der integral mit den gespritzten Borsten hergestellte gemeinsame Borstenträger in einem ersten Spritzgiessschritt hergestellt und die Handhabe in einem zweiten Spritzgiessschritt an den Borstenträger angespritzt oder umgekehrt. Dies geschieht vorzugsweise mit einem Zwei- oder Mehrkomponentenspritzgiessverfahren. Bevorzugt entsteht dabei zwischen dem Borstenträger und der Handhabe mindestens ein Formschluss und weiter bevorzugt ebenfalls ein Materialschluss.

Dabei ist die Handhabe bzw. deren Grundkörper vorzugsweise aus einer Hartkomponente hergestellt. An den Grundkörper kann neben der besagten Hartkomponente noch eine oder mehrere weitere Hartkomponenten angespritzt sein. Weiter können an diese Hartkomponenten noch eine oder mehrere Weichkomponenten angespritzt sein. Am Borstenträger können zusätzlich Reinigungselemente aus Weichmaterial angespritzt sein. Die Hartkomponente des Grundkörpers sowie die daran angespritzten Hart- bzw. Weichkomponente(n) bilden erneut mindestens ein Formschluss und bei einer bevorzugten Lösung ebenfalls ein Materialschluss.

In einer bevorzugten Ausführungsform weist die Handhabe der Haushaltsbürste oder Körperpflegebürste einen Kopfbereich und einen Griffbereich auf. Zwischen diesen Bereichen kann noch ein Halsbereich vorhanden sein. Der gemeinsame Borstenträger mit den mit diesem integralen gespritzten Borsten ist an den Kopfbereich angespritzt.

Bevorzugt weist bei dieser Ausführungsform die Handhabe im Kopfbereich wenigstens einen Durchlass auf und erstreckt sich der gemeinsame Borstenträger auf beiden Seiten der Handhabe zwischen welchen sie der Durchlass erstreckt. Weiter weist dabei der (einstückige) Borstenträger einen durch den Durchlass hindurch verlaufenden Verbindungssteg auf. Bei dieser Ausführungsform ist eine äusserst stabile Befestigung des Borstenträgers mit den gespritzten Borsten an der Handhabe garantiert, selbst dann, wenn für die Handhabe und den Borstenträger sowie die Borsten Kunststoffkomponenten verwendet werden, welche im Spritzgiessverfahren miteinander keinen Materialschluss eingehen. Es wird durch diese Massnahme eine mechanische Verbindung mittels Formschluss erzeugt.

Im Fall der Ausgestaltung einer mechanischen Verbindung zwischen der Handhabe und dem Borstenträger ist es so, dass die zuerst gespritzte Kunststoffkomponente einen höheren Schmelzpunkt haben muss als die zweitgespritzte Kunststoffkomponente, da sich ansonsten die erstgespritzte Kunststoffkomponente beim Einspritzen der zweitgespritzten Kunststoffkomponente verformt oder dass sie abschwämmt.

Werden Kunststoffkomponenten verwendet, welche im Spritzgiessverfahren eine Verbindung (Materialschluss) miteinander eingehen, kann sich der Borstenträger auch nur auf jener Seite beziehungsweise jenen Seiten der Handhabe beziehungsweise des Kopfbereichs befinden, auf welchem sich auch die gespritzten Borsten befinden. Bei dieser Ausführungsform kann auf den wenigstens einen Durchlass und den entsprechenden Verbindungssteg verzichtet werden.

Bei einer anderen bevorzugten Ausführungsform der erfindungsgemässen Haushaltsbürste weist die Handhabe wiederum einen Kopfbereich und einen Griffbereich, sowie vorzugsweise dazwischen einen Halsbereich, auf und ist der gemeinsame Borstenträger mit den integral damit hergestellten Borsten an den Kopfbereich montiert.

Bei dieser Ausführungsform werden die Handhabe und der gemeinsame Borstenträger mit den gespritzten Borsten getrennt voneinander im Spritzgiessverfahren hergestellt. Danach erfolgt die Montage. Dabei ist es denkbar, dass der gemeinsame Borstenträger mit den integralen gespritzten Borsten auswechselbar am Kopfbereich der Handhabe angeordnet ist.

In bevorzugter Weise ist der gemeinsame Borstenträger hülsenförmig oder becherförmig ausgebildet und auf den vorzugsweise zylindrisch ausgebildeten Kopfbereich aufgesteckt. Weiter kann der Borstenträger auch eine Form wie beschrieben, jedoch in gewissen Flächen Ausnehmungen aufweisen, sodass teilweise keine vollflächige Verbindung entsteht sondern beispielsweise eine Art Bänderung einen Teil der Aussenhülle formt.

Eine weitere Ausgestaltungsvariante sieht vor, dass der Borstenträger unter Vorspann montiert und etwas verformt ist und dadurch die Borstenbündel aufgespreizt sind. Die Handhabe beziehungsweise der Kopfbereich der Handhabe, der die Schnittstelle zwischen Handhabe und Borstenträger bildet, ist so gestaltet, dass der Borstenträger bei der Montage verformt bzw. gebogen wird und so eine andere Form aufweist als nach dem Spritzgiessen.

Der Borstenträger kann beispielsweise in einer flachen Form hergestellt werden und bei der Montage in eine Form gebracht werden, in der die Borstenbündel aufgespreizt werden. Das heisst, dass in der Herstellung des Borstenträgers die Längsrichtungen der Borstenbündel nicht dieselben Winkel zwischen sich aufweisen wie nach der Montage.

Die Vorteile liegen auf der Hand, das Spritzgiessverfahren für den Borstenträger vereinfacht sich und es kann auch eine grössere Winkligkeit erzeugt werden als dies möglich war.

Weiter kann der Borstenträger spezifisch auf die Spreizgeometrie ausgelegt werden, beispielsweise durch die Gestaltung verschiedener Schichtdicken im Borstenträger, also dem Formen von Stellen an welchen das spätere Verformverhalten verändert wird.

Es ist auch möglich, dass wenigstens einige der Borstenbündel (oder alle Borstenbündel) je einen individuellen Borstenträger aufweisen und von diesem jeweils nur die gespritzten Borsten des betreffenden Borstenbündels abstehen.

Dabei ist es möglich, dass zuerst die Borstenträger mit den gespritzten Borsten im Spritzgiessverfahren hergestellt und dann die Handhabe an die individuellen Borstenträger angespritzt ist. Es ist jedoch auch möglich, dass zuerst die Handhabe im Spritzgiessverfahren hergestellt ist und dann die Borstenträger zusammen mit den mit diesem integral hergestellten gespritzten Borsten an die Handhabe angespritzt oder in einem anderen Verfahren an die Handhabe montiert werden, beispielsweise durch kleben, verschweissen, vernieten etc..

Bei diesen Ausführungsformen bestehen bevorzugt die Handhabe und die individuellen Borstenträger mit den gespritzten Borsten aus unterschiedlichen Kunststoffkomponenten.

Dabei ist es auch möglich, dass sich die einzelnen Borstenbündel in der Kunststoffkomponente, aus der sie hergestellt sind, unterscheiden. Es ist auch möglich Reinigungselemente zu gestalten, die aus Weichmaterial bestehen und eingesetzt werden.

Die herzustellende Haushalts- oder Körperpflegebürste kann in diesem Fall wie aus einem Baukasten aufgebaut werden, indem die Borstenträger und die Trägerstrukturen von weichelastischen Elementen die gleiche Form aufweisen und in dieselben Ausnehmungen eingesetzt werden können. Auf diese Weise ist eine extrem grosse Variabilität gegeben, was die Gestaltung des Borstenfeldes betrifft.

Weiter können die Borstenbündel und entsprechend auch der Borstenträger aus mehreren verschiedenen Kunststoffkomponenten bestehen. Dabei kommen vorzugsweise die weiter hinten aufgeführten Borstenmaterialien, Weichmaterialien und Hartmaterialien in Frage. Dadurch kann beispielsweise die Härte oder die Farbe der Borsten und gegebenenfalls anderer Reinigungselemente im Borstenfeld variiert werden. So dass beispielsweise am Kopfende des Borstenfeldes härtere Borsten und am Halsende des Borstenfeldes weichere Borsten angeordnet sind; dabei ist der Variabilität der Anordnung lediglich die Grenze der Formbarkeit im Spritzgiessprozess gesetzt. Im ersten Spritzgiessschritt werden die Borsten mit der einen Kunststoffkomponente gespritzt, im zweiten Spritzgiessschritt die Borsten mit der weiteren Kunststoffkomponente. Herstelltechnisch sind die verschiedensten Lösungen für die Formung möglich, beispielsweise kann die Core-Back-Technologie oder ein Umlegen eingesetzt werden, um die Kavität für die zweite Kunststoffkomponente bereit zu stellen.

Bevorzugt weisen die gespritzten Borsten bei ihrem Austritt aus dem Borstenträger einen Durchmesser von 0,4 mm bis 1,2 mm auf. Besonders bevorzugt sind bei Haushaltsbürsten Durchmesser zwischen 0,6 mm und 1 mm und bei Körperpflegebürsten Durchmesser zwischen 0,4 mm und 0,7 mm.

Die freie Länge der gespritzten Borsten bei Haushaltsbürsten beträgt 12 mm bis 25 mm, besonders bevorzugt sind freie Längen von 15 mm bis 22 mm. Bei Körperpflegebürsten beträgt die freie Länge 4 mm bis 16 mm vorzugsweise 8 mm bis 12 mm.

Erfindungsgemäß gilt, dass das Verhältnis von Borstenlänge zu Durchmesser am Borstenende von 20:1 bis 125:1 vorzugsweise von 40:1 bis 60:1 beträgt.

Bevorzugt weisen die gespritzten Borsten einen Borstenstamm auf, welcher sich vom Borstenträger bis zum freien Ende der gespritzten Borsten hin erstreckt, das heisst, dass das Ende des Borstenstammes dem freien Ende der gespritzten Borsten entspricht. Es ist jedoch auch möglich, dass der Borstenstamm an seinem dem Borstenträger abgewandten Ende eine Endkappe trägt. Diese kann beispielsweise eine abgerundete, insbesondere halbkugelförmige Form aufweisen.

Der Durchmesser des Borstenstamms bei dessen dem Borstenträger abgewandten Ende beträgt für Haushaushaltsbürsten vorzugsweise zwischen 0,2 mm bis 0,6 mm, besonders bevorzugt beträgt dieser Durchmesser 0,35 mm bis 0,55 mm. Bei Körperpflegebürsten beträgt der Durchmesser 0,05 mm bis 0,35 mm vorzugsweise 0,15 mm bis 0,3 mm.

Falls der Borstenstamm eine Endkappe trägt, schliesst deren Aussenkontur bevorzugt kontinuierlich an die Aussenkontur des Borstenstamms an. Herstelltechnisch kann es auch möglich sein, einen minimalen Absatz zu gestalten; das heisst, dass die Endkappe gegenüber dem Ende des Borstenstamms einen kleineren Durchmesser aufweist. Dadurch kann vermieden werden, dass bei ungenauer Positionierung der Endkappe gegenüber dem Borstenstamm Entformungsprobleme in Form von Langziehen entstehen.

Der Durchmesser der Endkappe beim Übergang vom Borstenstamm zur Endkappe beträgt bei Haushaltsbürsten zwischen 0,17 mm und 0,57 mm vorzugsweise 0,32 mm bis 0,52 mm, und bei Körperpflegebürsten zwischen 0,03 mm und 0,33 mm, vorzugsweise 0,13 mm bis 0,27 mm. Die Ausdehnung der Endkappe in Längsrichtung der Borsten bzw. des Borstenbündels beträgt 0,2 mm bis 0,8 mm, vorzugsweise 0,4 mm bis 0,6 mm.

Die Endkappe kann neben einer runden Form auch eine spitze Form aufweisen. Beispielsweise in Form eines Kegels. Durch diese Form können die Funktionalitäten der zugespitzten Borsten erreicht werden.

Es ist auch denkbar, dass der Borstentragstamm am freien Ende anstelle einer Endkappe mehrere kleine borstenartige Verlängerungen trägt.

Die Längsachse der Borsten weist gegenüber der Austrittsfläche des Borstenträgers, aus welchem die Borsten austreten, einen Winkel von 60° bis 90°, vorzugsweise zwischen 80° und 90° auf.

Die Borstenbündel sind vorzugsweise von rundem oder annähernd rundem Querschnitt.

Weiter sind aber auch Querschnitte in quadratischer, rechteckiger, generell polygonaler, dreieckiger, trapezförmiger, rhomboidförmiger oder generell n-eckiger Form möglich. Dies gilt sowohl für Haushaltsbürsten wie auch für Kosmetikapplikatoren und alle in dieser Schrift genannten Ausführungsformen.

Die Borstenbündel weisen bei Haushaltsbürsten bevorzugt 10 bis 35 gespritzte Borsten, insbesondere 15 bis 35 gespritzte Borsten, auf. Bei Körperpflegebürsten kann die Anzahl der Borsten pro Borstenbündel auch geringer sein. Die Anzahl liegt hierbei im Bereich von 5 bis 30 Borsten, vorzugsweise bei 5 bis 25 Borsten pro Borstenbündel. Es ist denkbar, dass in diesem Rahmen die Anzahl gespritzter Borsten pro Borstenbündel an einer Haushalts- oder Körperpflegebürste unterschiedlich ist. Bevorzugt weisen jedoch alle Borstenbündel eines Borstenfeldes dieselbe Anzahl gespritzter Borsten auf.

Der Durchmesser der gespritzten Borsten in einem Borstenbündel kann variieren, es ist nicht zwingend so, dass alle Borsten denselben Durchmesser haben. Die Anordnung der Durchmesser kann dabei zufällig, symmetrisch oder nicht symmetrisch sein. Falls verschiedene Durchmesser in einem Borstenbündel realisiert werden, sind die Borsten mit den grösseren Durchmessern vorzugsweise am Rand des Bündels realisiert.

In einem Borstenfeld können auch die Borstenbündel als Ganzes in ihren Borstendurchmessern variieren. Dabei können Borstenbündel mit Borsten mit kleinerem Durchmesser eher im Zentrum des Borstenfeldes angeordnet sein und Borstenbündel mit Borsten mit grösseren Durchmessern eher am Rand.

Der Bündelabstand beträgt bei Haushaltsbürsten vorzugsweise zwischen 1 mm und 10 mm. In Längsrichtung der Handhabe oder des Borstenträgers gesehen sind Bündelabstände von 1 mm bis 5 mm, insbesondere von 2 mm bis 3 mm bevorzugt. In Richtung quer zur Längsrichtung sind Bündelabstände von 1 mm bis 10 mm, insbesondere von 6 mm bis 8 mm bevorzugt.

Bei Körperpflegebürsten beträgt der Bündelabstand vorzugweise zwischen 0,5 mm und 2 mm.

Besonders bevorzugt sind die Borstenbündel bei Haushaltsbürsten in in Längsrichtung der Handhabe beziehungsweise des Kopfteils oder des Borstenträgers verlaufenden Längsreihen angeordnet. Bevorzugt weist eine solche Reihe 3 bis 9, insbesondere 4 bis 7, Borstenbündel auf. In Querrichtung sind die Borstenbündel vorzugsweise versetzt angeordnet. Im Endbereich der Handhabe beziehungsweise des Kopfteils sind die Borstenbündel bevorzugt in kreisartigen Reihen angeordnet.

Der Borstenträger ist bevorzugt schichtartig ausgebildet und weist dabei sowohl bei Haushaltsbürsten als auch bei Körperpflegebürsten eine Schichtdicke zwischen 1 mm bis 5 mm, vorzugsweise 2 mm bis 4 mm auf.

Die Handhabe weist bei Haushaltsbürsten im Kopfbereich anschliessend an den Halsbereich eine Dicke von 1 cm bis 2,5 cm vorzugsweise von 1,3 cm bis 2 cm auf, dies gemessen zwischen der Bürstenrückseite und der Bürstenvorderseite ohne Borstenträger. Das vorliegende erfindungsgemässe Verfahren erlaubt es so, dass geringere Körperdicken erreicht werden können als mit den bekannten Stanzverfahren zur Verankerung der Borsten, weil die Verankerungstiefen in diesen Verfahren gewisse Körperdicken bedingen.

Bei erfindungsgemässen Haushaltsbürsten oder Körperpflegebürsten können Borstenbündel nicht parallel zueinander ausgerichtet sein, d.h. die Längsrichtungen dieser Borstenbündel verlaufen nicht parallel zueinander, sondern sie sind windschief zueinander oder schliessen zusammen einen Winkel ein. Das erfindungsgemässe Spritzgiesswerkzeug ermöglicht auch die Herstellung erfindungsgemässer Haushaltsbürsten oder Körperpflegebürsten mit solchen nicht parallel zueinander verlaufenden Borstenbündeln.

Erfindungsgemässe Haushaltsbürsten oder Körperpflegebürsten mit erfindungsgemässen gespritzten Borsten können zusätzlich mit konventionellen, extrudierten zylindrischen oder nachträglich zugespitzten Borsten bestückt sein. Durch die Kombination können spezifische Funktionalitäten erreicht werden. Das Bestücken der Bürsten mit konventionellen, extrudierten Borsten erfolgt in bekannter Manier nach der Herstellung der gespritzten Borsten.

Das Bestücken mit konventionellen, extrudierten Borsten kann auch vor der Herstellung der gespritzten Borsten erfolgen.

Das Spritzgiesswerkzeug weist mehrere Werkzeugteile auf, welche im geschlossenen Zustand des Spritzgiesswerkzeugs eine Kavität zum Spritzgiessen der gespritzten Borsten und mindestens des Borstenträgers bilden. Es ist jedoch auch denkbar, dass diese Kavität auch zum Spritzgiessen der Handhabe dient.

Mindestens eines dieser Werkzeugteile weist einen, zusammen mit den übrigen Werkzeugteilen die Kavität begrenzenden Aufnahmekörper und einen relativ zu diesem beweglichen Stützkörper auf. Dieser Werkzeugteil dient insbesondere der Herstellung von Borstenbündeln, welche nicht parallel zueinander angeordnet sind, beispielsweise dort, wo die Handhabe beziehungsweise der Borstenträger räumlich gebogen geformt ist. Der Aufnahmekörper ist mit Durchlässen versehen, in welchen pro betreffendes zu spritzendes Borstenbündel ein Werkzeugeinsatz verschiebbar gelagert ist. Die Werkzeugeinsätze sind mit den Borstenkavitäten zur Herstellung der betreffenden gespritzten Borsten versehen. Die Borstenkavitäten erlauben es, die gespritzten Borsten in einem Teil auszuformen.

In Schliessstellung des Spritzgiesswerkzeugs stützt der Stützkörper sowohl den Aufnahmekörper als auch die Werkzeugeinsätze ab. Beim Öffnen des Spritzgiesswerkzeugs werden in einem ersten Öffnungsschritt die beiden Werkzeughälften (stationärer Werkzeugteil und weiterer Werkzeugteil) auseinander bewegt und die Spülbürste bleibt in der Kavität im weiteren Werkzeugteil hängen, beispielsweise weil gewisse hinterschnittige Strukturen vorhanden sind.

In einem anschliessenden zweiten Öffnungsschritt, hebt sich der Stützkörper vom in seiner Schliessstellung verharrenden Aufnahmekörper ab und bewegen sich die Werkzeugeinsätze zusammen mit dem Stützkörper relativ zum Aufnahmekörper in Richtung vom Inneren der Kavität nach aussen. Dabei werden die gespritzten Borsten teilweise entformt.

In einem an den zweiten Öffnungsschritt anschliessenden dritten Öffnungsschritt bewegt sich dann der Aufnahmekörper, zusammen mit dem Stützkörper und den Werkzeugeinsätzen, vollständig in die Offenstellung. Dabei werden die betreffenden Borsten vollständig (gegebenenfalls zwangs-) entformt.

Das Spritzgiesswerkzeug als Ganzes wird geöffnet.

In bevorzugter Weise sind die relativ zum Aufnahmekörper beweglichen Werkzeugeinsätze in Richtung zum Stützkörper hin mittels Federn vorgespannt. Dies führt zu einem einfachen Werkzeugaufbau.

Mittels der Federn ist einerseits sichergestellt, dass sich beim genannten zweiten Öffnungsschnitt die Werkzeugeinsätze relativ zum Aufnahmekörper zusammen mit dem Stützkörper in Öffnungsrichtung bewegen und andererseits ermöglicht, dass der Stützkörper die Werkzeugeinsätze nur abzustützen braucht.

Weiter weist das Spritzgiesswerkzeug bevorzugt wenigstens zwei Werkzeugteile auf, welche wie oben beschrieben ausgebildet sind. Jedes dieser Werkzeugteile weist je einen Aufnahmekörper mit darin beweglich gelagerten Werkzeugeinsätzen und einen Stützkörper auf. Die Bewegungsrichtungen dieser Werkzeugteile beim Schliessen und Öffnen des Spritzgiesswerkzeugs verlaufen bevorzugt in einem Winkel zueinander, wenn die durch sie geführten Werkzeugeinsätze Borstenbündel von sehr verschiedenen Längsrichtungen bilden.

Mittels eines derartigen Spritzgiesswerkzeugs lassen sich erfindungsgemässe Haushaltsbürsten und Körperpflegebürsten herstellen, bei welchen Borstenbündel unterschiedliche Längsrichtungen aufweisen.

Mögliche Kunststoffkomponenten als Hartkomponente sind:
- Styrolpolymerisiate wie Styrolacrylnitril (SAN), Polystyrol (PS), Acrylnitrylbutadienstyrol (ABS), Styrolmethylmethacrylate (SMMA) oder Styrolbutadien (SB);
- Polyolefine wie Polypropylen (PP) oder Polyethylen (PE) beispielsweise auch in den Formen high-density Polyethlen (HDPE) oder low-density Polyethylen (LDPE);
- Polyester wie Polyehtylenterephtalat (PET) in Form von säuremodifiziertem Polyethylenterphtalat (PETA) oder glykolmodifiziertem Polyethylenterephtalat (PETG), Polybutyleneterephtalat (PBT), säuremodifiziertes Polycyclohexylenedimethyleneterephtalate (PCT-A) oder glykolmodifiziertes Polyclyclohexylenedimethyleneterephtalate (PCT-G);
- Cellulosederivate wie Celluloseacetat (CA), Celluloseacetobutyrat (CAB), Celluloseproprionat (CP), Celluloseacetatphtalat (CAP) oder Cellulosebutyrat (CB);
- Polyamide (PA) wie PA 6.6, PA 6.10 oder PA 6.12;
- Polymethylmethacrylat (PMMA);
- Polycarbonat (PC);
- Polyoxymethylen (POM);
- Polyvinylchlorid (PVC);
- Polyurethan (PUR)

Beispiele aus dem Bereich der thermoplastischen Elastomere (TPE's) sind folgende Weichkomponenten:
- Thermoplastische Polyurethan-Elastomere (TPE-U)
- Thermoplastische Styrol-Elastomere (TPE-S) wie beispielsweise ein Styrol-Ethylen-Butylen-Styrol-Copolymer (SEBS) oder Styrol-Butadien-Styrol-Copolymer (SBS)
- Thermoplastische Polyamid-Elastomere (TPE-A)
- Thermoplastische Polyolefin-Elastomere (TPE-O)
- Thermoplastische Polyester-Elastomere (TPE-E)

Weiter können die Thermoplaste Polyethylen (PE) und Polyurethan (PU) wie genannt als Hartkomponente als auch als Weichkomponente eingesetzt werden.

Besonders geeignet als Hartkomponente ist PP, am meisten bevorzugt wird PP mit einem E-Modul von 1000 - 2400 N/mm², vorzugsweise 1300 bis 1800 N/mm². Als Weichkomponente wird bevorzugt ein TPE-S eingesetzt. Die Shore A Härten der Weichkomponente liegen vorzugsweise unter 90 Shore A. Die Weichkomponenten bilden mit der Hartkomponente mittels Überspritzen im Zwei- oder Mehrkomponentenspritzgiessverfahren einen Materialschluss.

Beispielmaterialien für die Herstellung von gespritzten Borsten und Borstenträger (Borstenmaterial):
- Polyamid Elastomer (z.B. Grilflex ELG 5930 von Ems-Chemie AG)
- Polyester Elastomer (z.B. Riteflex 672 RF Nat oder Riteflex RKX 193 RF Nat von Ticona Polymers oder Hytrel 7248 von DuPont)
- Thermoplastische Polyurethan-Elastomere (z.B. Desmopan DP 1092A, DP 3065D, DP 1092A von Bayer Material Science oder Elastolan 1154 D, 1195 A von BASF) Die Borstenmaterialien haben eine Shore D Härte von 30 bis 80.

Konventionelle extrudierte Borsten (zugespitzt oder zylindrisch) sind vorzugsweise aus Polyamid (PA) oder Polyester (PBT) hergestellt. Gummielastische Reinigungselemente sind aus einer Weichkomponente hergestellt.

Ebenfalls einsetzbar sind sogenannte Biokunststoffe, d.h. Kunststoffe die aus nachwachsenden Rohstoffen hergestellt sind.

Der Kunststoffkomponente, die für die Formung der Borsten eingesetzt wird, können auch Zusätze beigemischt sein. Beispielsweise Dekorationspartikel wie Glitter oder Schleifpartikel, beispielsweise Perlit, zur Erhöhung der Abrasivität der Borsten.

Für Haushaltsbürsten der genannten Art sind die Anforderungen an die Materialien weniger spezifisch als beispielsweise für Zahnbürsten. Es können jedoch nicht nur die genannten Materialien für gespritzte Borsten eingesetzt werden. Es ist auch möglich, die Borsten aus PP, PE, PA, PBT, TPE oder einem Gemisch aus den genannten Materialien zu formen.

Bei Körperpflegebürsten sind die Anforderungen an die Materialien je nach Anwendung unterschiedlich. Für gewisse Anwendungen können nur die weiter oben genannten Materialien eingesetzt werden, für andere eben auch, wie bei Haushaltsbürsten genannt, weitere Materialien. Grundsätzlich ist es möglich, die Handhabe wie besprochen aus einer oder mehreren Hart- und Weichkomponenten zu gestalten. Der Borstenträger beziehungsweise die Reinigungselemente im Borstenfeld können ebenfalls aus verschiedenen Kunststoffkomponenten hergestellt sein. Dabei können eine oder mehrere Borstenkomponenten und eine oder mehrere Weichkomponenten eingesetzt werden. Im Herstellverfahren ist es möglich diese Komponenten in verschiedenen Reihenfolgen einzubringen, beispielsweise eben nicht zuerst die Borstenkomponente sondern die Weichkomponente.

Die Handhabe beziehungsweise der Kopfbereich oder der Endbereich können zusätzlich eine Kante integriert haben, die ein Kratzen an Oberflächen erlaubt. Diese kann aus den verschiedensten Materialien geformt sein.

Durch die Beschreibung und Spezifizierung der erfindungsgemässen Haushaltsbürste oder Körperpflegebürste und des Spritzgiesswerkzeugs ist somit entsprechend auch das Verfahren zur Herstellung der Haushaltsbürsten oder Körperpflegebürsten offenbart.

Mit dem Spritzgiesswerkzeug können selbstverständlich auch Borstenfelder gestaltet werden, die Bündel aufweisen, welche mehr als die besagte Anzahl an Borsten aufweisen. Dabei werden flächigere Borstenbündel bzw. auch Borstenstreifen oder Borstenflächen gestaltet, die wiederum in Winkeln an einem Bürstenkopf befestigt sind. Die Kombination der verschiedenen möglichen Arten von Borstenbündeln ist selbstverständlich möglich, beispielsweise in derselben Bürste flächige Bündel und Borstenbündel wie sie hauptsächlich beschrieben sind.

Zur Herstellung der erfindungsgemässen Bürsten wird mindestens ein Spritzgiesswerkzeug eingesetzt. In diesem werden sowohl die Handhabe wie auch der Borstenträger mit den Borsten hergestellt. Es ist aber auch möglich, die Handhabe separat zu spritzen und ein zweites Werkzeug für den Borstenträger mit den Borsten vorzusehen, wobei im zweiten Werkzeug die Handhabe entweder eingelegt und umspritzt wird oder einfach ein separater Borstenträger mit Borsten hergestellt wird, der anschliessend oder später an die Handhabe montiert wird.

Der Vollständigkeit halber sei erwähnt, dass es in sämtlichen Ausgestaltungsvarianten auch möglich ist, kombinierte Borstenfelder zu gestalten. Das heisst, dass neben den gespritzten Borsten auch konventionelle zylindrische oder zugespitzte Filamente eingesetzt werden können, wobei diese durch die verschiedensten Verfahren im Borstenträger befestigt werden können, beispielsweise im Ankerstanz- oder Schlingenstanzverfahren, oder auch mittels den bekannten AFT-Verfahren (Anchor Free Tufting), IMT-Verfahren (In Mould Tufting) oder dem IAP-Verfahren (Integrated Anchorless Production), wie auch anderen Bürsten Herstellungs-Verfahren. Weiter können neben diesen Elementen auch weichelastische/gummielastische Reinigungselemente im selben Borstenfeld integriert werden.

Als Haushaltsbürsten gemäss Beschrieb gelten insbesondere Spülbürsten, WC-/Toilettenbürsten, Bodenwischer/Besen, Schrubber, Flaschenputzer, Nagelbürsten und als Körperpflegebürsten gelten insbesondere Applikatoren, die für die Applikation von Kosmetikas (z.B. Nagellacke, Mascara), Haarpflegeprodukten (z.B. Haarfärbungen) oder von Medizinalprodukten verwendet werden können.

Die Erfindung wird an Hand in der Zeichnung dargestellten Ausführungsbeispielen näher erläutert.

Es zeigen rein schematisch:
- Fig. 1: in perspektivischer Darstellung eine erste Ausführungsform einer als Spülbürste ausgebildeten Haushaltsbürste gemäss der vorliegenden Erfindung;
- Fig. 2: ebenfalls in perspektivischer Darstellung, jedoch von der Bürstenvorderseite her, den Kopfbereich und einen Teil des Halsbereichs der Haushaltsbürste gemäss Figur 1;
- Fig. 3: in Seitenansicht den Kopfbereich und einen Teils des Halsbereichs der Haushaltsbürste gemäss den Figuren 1 und 2;
- Fig. 4: in Sicht von vorne den Kopfbereich und den Teil des Halsbereichs der Haushaltsbürste gemäss den Figuren 1 bis 3;
- Fig. 5: den Kopfbereich der Haushaltsbürste gemäss den Figuren 1 bis 4 in einem Querschnitt entlang der Linie V - V der Figur 3;
- Fig. 6: die Haushaltsbürste gemäss den Figuren 1 bis 5 in einem Querschnitt entlang der Linie VI - VI der Figur 3;
- Fig. 7: in einem Längsschnitt entlang der Linie VII - VII der Figur 4 die Haushaltsbürste gemäss den Figuren 1 bis 6;
- Fig. 8: im Querschnitt und vergrössert einen Teil des Kopfbereichs der Haushaltsbürste gemäss den Figuren 1 bis 7 im Bereich eines Borstenbündels;
- Fig. 9: eine zweite Ausführungsform einer ebenfalls als Spülbürste ausgebildeten erfindungsgemässen Haushaltsbürste, wobei der Borstenträger mit den integral damit hergestellten gespritzten Borsten auf den Kopfteil der Handhabe montiert ist, in perspektivischer Darstellung;
- Fig. 10: ebenfalls in perspektivischer Darstellung die Handhabe der Haushaltsbürste gemäss Figur 9;
- Fig. 11: in perspektivischer Darstellung den in Figur 10 mit XI bezeichneten Teil des Kopfbereichs der Handhabe;
- Fig. 12: einen Querschnitt durch den Kopfbereich der Haushaltsbürste im montierten Zustand gemäss den Figuren 9 bis 11, Position gemäss Figur 14 XII;
- Fig. 13: gegenüber Figur 12 vergrössert einen dort mit XIII bezeichneten Teil des Kopfbereichs der Haushaltsbürste;
- Fig. 14: einen Längsschnitt durch den Kopfbereich der Haushaltsbürste im montierten Zustand gemäss den Figuren 9 bis 13;
- Fig. 15: gegenüber Figur 14 vergrössert den dort mit XV bezeichneten Teil des Kopfbereichs;
- Fig. 16: in Ansicht und Draufsicht eine erste Ausbildungsform eines Borstenbündels mit sieben integral mit dem Borstenträger im Spritzgiessverfahren hergestellten gespritzten Borsten;
- Fig. 17: in perspektivischer Darstellung das Borstenbündel gemäss Fig. 16;
- Fig. 18: in Ansicht und Draufsicht die Ausbildungsform aus Fig. 16 und 17 nach dem Erkalten, mit sieben Borsten, wobei die sechs um eine zentrale gespritzte Borste herum angeordneten gespritzten Borsten gegen das freie Ende hin aufeinander zu verlaufen;
- Fig. 19: in perspektivischer Darstellung das Borstenbündel gemäss Figur 18;
- Fig. 20: in Ansicht und Draufsicht eine zweite Ausführungsform eines Borstenbündels mit einer Vielzahl von gespritzten Borsten, welche entlang von drei konzentrischen Kreisen in Umfangsrichtung verteilt angeordnet sind und die dem äussersten Kreis zugeordneten Borsten eine grössere Dicke aufweisen als die übrigen Borsten;
- Fig. 21: in perspektivischer Darstellung das Borstenbündel gemäss Figur 20;.
- Fig. 22: in perspektivischer Darstellung ein hülsenartiger Borstenträger für eine als WC-Bürste ausgebildete erfindungsgemässe Haushaltsbürste mit einer Vielzahl von Borstenbündel, welche in radialer Richtung vom Borstenträger abstehen;
- Fig. 23: eine Ansicht von vorne auf die Bürste gemäss Figur 22;
- Fig. 24: in Seitenansicht das Borstenfeld gemäss den Figuren 22 und 23;
- Fig. 25: der Borstenträger mit dem Borstenfeld gemäss den Figuren 22 bis 24 in einem Längsschnitt;
- Fig. 26: in perspektivischer Darstellung (auf die Bürstenrückseite) eine als Nagelbürste ausgebildete erfindungsgemässe Haushaltsbürste;
- Fig. 27: in perspektivischer Darstellung (auf die Bürstenvorderseite) die Nagelbürste gemäss Figur 26;
- Fig. 28: in Seitenansicht die Nagelbürste gemäss den Figuren 26 und 27;
- Fig. 29: in Ansicht die Nagelbürste gemäss den Figuren 26 bis 28;
- Fig. 30: in perspektivischer Darstellung (auf die Bürstenrückseite) den Kopf einer als Besen ausgebildeten erfindungsgemässen Haushaltsbürste;
- Fig. 31: in perspektivischer Darstellung (auf die Bürstenvorderseite) den Besen gemäss Figur 30 von unten;
- Fig. 32: in Ansicht den Besen gemäss den Figuren 30 und 31;
- Fig. 33: in Seitenansicht den Besen gemäss den Figuren 30 bis 32;
- Fig. 34: in Untersicht den Besen gemäss den Figuren 30 bis 33;
- Fig. 35: in perspektivischer Darstellung eine als Applikator-Bürste ausgebildete Körperpflegebürste;
- Fig. 36: in Ansicht die Applikator-Bürste gemäss Figur 35;
- Fig. 37: in Untersicht die Applikator-Bürste gemäss den Figuren 35 und 36;
- Fig. 38: in perspektivischer Darstellung eine weitere Ausführungsform einer als Applikator-Bürste ausgebildeten Körperpflegebürste mit drei in einer Reihe angeordneten Borstenbündel;
- Fig. 39: in Ansicht die Applikator-Bürste gemäss der Figur 38;
- Fig. 40: in Untersicht die Applikator-Bürste gemäss den Figuren 38 und 39;
- Fig. 41: in perspektivischer Darstellung eine weitere Ausführungsform einer als Applikator-Bürste mit flexibel angeordneten Borstenbündeln ausgebildete Körperpflegebürste;
- Fig. 42: in Untersicht die Applikator-Bürste gemäss der Figur 41;
- Fig. 43: in Ansicht die Applikator-Bürste gemäss den Figuren 41 und 42;
- Fig. 44: in Seitenansicht die Applikator-Bürste gemäss den Figuren 41 bis 43;
- Fig. 45: in perspektivischer Darstellung eine weitere Ausführungsform einer Applikator-Bürste mit flexibel angeordneten Borstenbündeln und einer Stützfläche;
- Fig. 46: in Untersicht die Applikator-Bürste gemäss der Figur 45;
- Fig. 47: in Ansicht die Applikator-Bürste gemäss den Figuren 45 und 46;
- Fig. 48: in Seitenansicht die Applikator-Bürste gemäss den Figuren 45 bis 47;
- Fig. 49: einen Querschnitt durch ein Spritzgiesswerkzeug zur Herstellung erfindungsgemässer Haushaltsbürsten in Schliessstellung; und
- Fig. 50: in gleicher Darstellung wie Figur 49 das dort gezeigte Spritzgiesswerkzeug in Offenstellung.

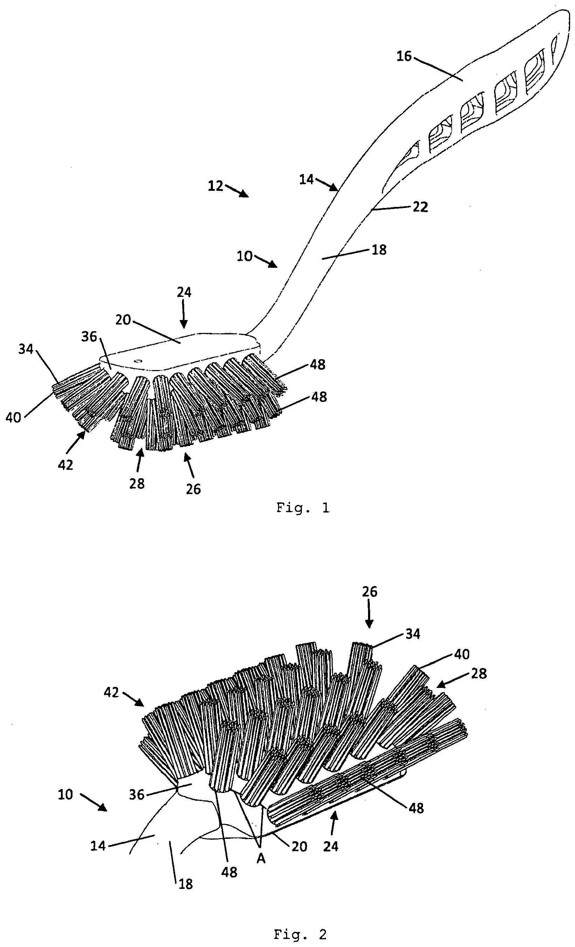

Die Figuren 1 bis 8 zeigen eine erste Ausführungsform einer als Spülbürste 10 ausgebildeten erfindungsgemässen Haushaltsbürste 12. Sie weist eine Handhabe 14 mit einem Griffbereich 16, einem daran anschliessenden Halsbereich 18 und einem Kopfbereich 20 auf, welcher an das dem Griffbereich 16 abgewandten Ende des Halsbereichs 18 anschliesst. Die Handhabe 14 ist einstückig und im Spritzgiessverfahren aus einer Kunststoffkomponente hergestellt, wobei der Griffbereich und der Halsbereich 18 einen Stiel 22 bilden.

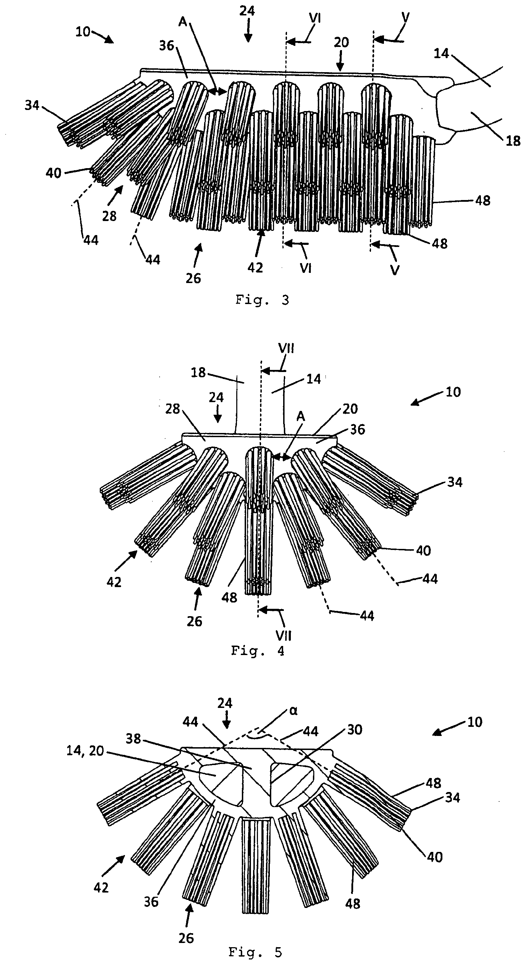

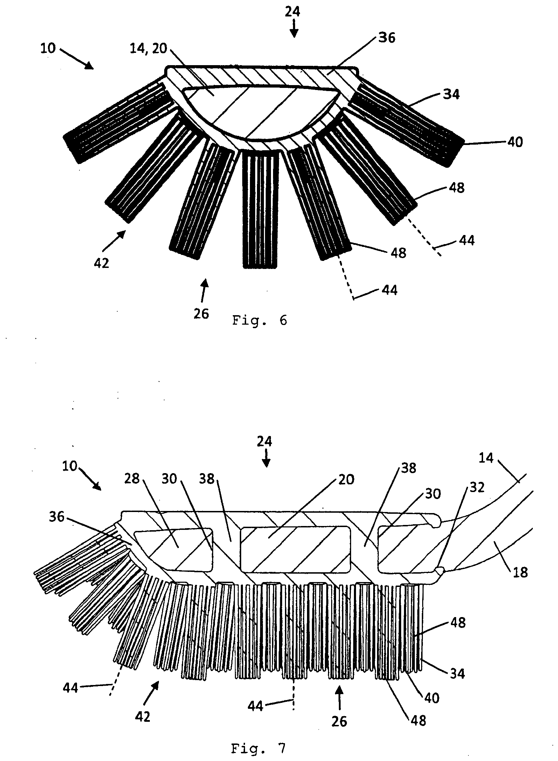

Der Kopfbereich 20 der Handhabe 14 ist wenigstens annähernd geradlinig ausgebildet und weist einen nahezu kreissegmentartigen Querschnitt auf, wie dies insbesondere in den Figuren 5 und 6 ersichtlich ist. Die leicht gebogene Sehne dieses Querschnitts ist der Bürstenrückseite 24 und der Kreisbogen der borstentragenden Bürstenvorderseite 26 zugeordnet.

Im freien Endbereich 28 ist der Kopfbereich 20 räumlich konvex gekrümmt ausgebildet, ähnlich einem Teil eines Kugelabschnitts.

Wie dies insbesondere den Figuren 5 und 7 entnehmbar ist, weist die Handhabe 14 im Kopfbereich 20 zwei in Längsrichtung des Kopfbereichs 20 voneinander beabstandete Durchlässe 30 auf, welche sich von der der Bürstenrückseite 24 zugewandten Seite zu der Bürstenvorderseite 26 zugewandten Seite des Kopfbereichs 20 erstrecken.

Weiter weist die Handhabe 14 im Übergang vom Kopfbereich 20 zum Halsbereich 18 eine in Umfangsrichtung umlaufende Nut 32 auf, welche in radialer Richtung gegen aussen offen ist.

Im gezeigten Ausführungsbeispiel ist der gesamte Kopfbereich 20 der Handhabe 14 mittels einer zweiten Kunststoffkomponente umspritzt, mit welcher integral auch alle gespritzten Borsten 34 ausgebildet sind. Diese zweite Kunststoffkomponente überdeckt schichtartig den Kopfbereich 20 und bildet einen Borstenträger 36 für die gespritzten Borsten 34.

Die zweite Kunststoffkomponente bildet ebenfalls je einen die betreffenden Durchlässe 30 durchgreifenden Verbindungssteg 38, welcher den der Bürstenvorderseite 26 zugewandten Bereich des Borstenträgers 36 mit dem der Bürstenrückseite 24 zugewandten Bereich verbindet. Weiter greift die zweite Kunststoffkomponente, d.h. der Borstenträger 36, wulstartig in die Nut 32 ein.

Durch den Eingriff in die Nut 32 und mittels der Verbindungsstege 38 ist eine ausgezeichnete Befestigung des Borstenträgers 36 an der Handhabe 14 sichergestellt, selbst wenn die erste Kunststoffkomponente und die zweite Kunststoffkomponente aus Materialen gewählt sind, welche beim Spritzgiessen keine Verbindung miteinander eingehen.

Auch wenn für die erste und die zweite Kunststoffkomponente Materialen verwendet werden, welche im Spritzgiessverfahren eine Verbindung eingehen, kann die gezeigte Ausführungsform gewählt werden. Im letztgenannten Fall ist es jedoch auch möglich, auf die Durchlässe 30 und die Verbindungsstege 38 und gegebenenfalls auf den der Bürstenrückseite 24 zugewandten Teil des Borstenträgers 36 zu verzichten.

Alle Borsten 34 sind zusammen mit dem Borstenträger 36 gespritzt und in Borstenbündeln 40 angeordnet. Das Borstenfeld 42 ist somit ausschliesslich durch eine Vielzahl von Borstenbündeln 40 mit gespritzten Borsten 42 gebildet.

Im gezeigten Ausführungsbeispiel sind alle Borstenbündel 40 gleich ausgebildet und die gespritzten Borsten 34 verlaufen in den jeweiligen Borstenbündeln 40 parallel zu einander.

Längsrichtungen der Borstenbündel 40 sind mit strichpunktierten Linien 44 angedeutet.

In den Borstenbündeln 40 stehen die vom Borstenträger 36 abstehenden Borsten 34 dicht beieinander, während die Borstenbündel 40 mit einem Bündelabstand A voneinander beabstandet sind.

Das Borstenfeld 42 weist mehrere, im gezeigten Ausführungsbeispiel sieben Reihen 48 von Borstenbündeln 40 auf. Diese Reihen verlaufen in Längsrichtung des Kopfbereichs 20 beziehungsweise des Borstenträgers 36 und des Borstenfeldes 42 und sind in Umfangsrichtung innerhalb eines Borstenfeldwinkels α (Figur 5) wenigstens annähernd gleichmässig verteilt angeordnet. Die Borsten 34 und somit auch die Borstenbündel 40, beziehungsweise deren Längsrichtung 44, verlaufen wenigstens annähernd rechtwinklig zur schichtartigen Ausdehnung des Borstenträgers 36.

In Längsrichtung gemessen befinden sich die Borstenbündel 40 jeweils einer Reihe 48 bezüglich den Borstenbündeln 40 der benachbarten Reihen 48 etwa in der Mitte; die benachbarten Reihen 48 sind somit in Längsrichtung versetzt.

Die Borstenbündel 40 sind im Endbereich 28 nicht mehr in geradlinigen Reihen angeordnet, sondern sie sind zueinander räumlich derart (strahlenartig) verteilt, dass sie im Wesentlichen denselben Bündelabstand A aufweisen, wie die Borstenbündel 40 in den Reihen.

Im Endbereich 28 verlaufen die Borstenbündel 40 nicht mehr parallel zueinander wie in den einzelnen Reihen 48, sondern sie, beziehungsweise deren Längsrichtungen 44, sind windschief angeordnet oder schliessen miteinander (räumliche) Winkel ein.

Der Borstenträger 36 weist eine Schichtdicke zwischen 1 mm bis 5 mm, vorzugsweise 2 mm bis 4 mm auf.

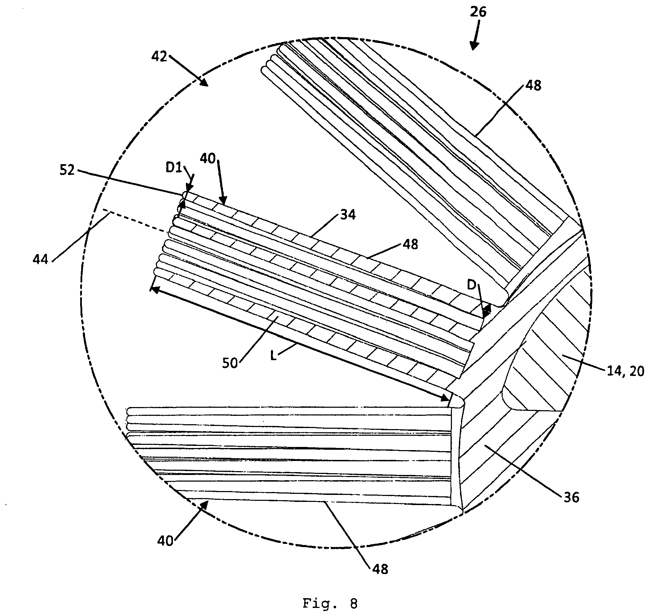

Die Figur 8 zeigt ein Borstenbündel 40 vergrössert im Schnitt und zwei je einer benachbarten Reihe 48 angehörende Borstenbündel 40 in Ansicht.

Die Borsten 34 der Borstenbündel sind integral mit dem allen Borstenbündeln 40 gemeinsamen Borstenträger 36 ausgebildet.

Jede der gespritzten Borsten 34 weist einen Borstenstamm 50 auf, dessen Länge in Figur 8 mit L bezeichnet ist. Der Borstenstamm 50 erstreckt sich von der Austrittstelle der Borste 34 aus dem Borstenträger 36 bis zum freien Ende der Borste 34 beziehungsweise, wie im vorliegenden Beispiel gezeigt, zu einer Endkappe 52. Letztere bildet ein nahezu halbkugelartiges abgerundetes Ende der Borste 34.

Mit D ist in Figur 8 der Durchmesser der Borsten 34, beziehungsweise des Borstenstamms 50, beim Austritt aus dem Borstenträger 36 gekennzeichnet; mit D1 ist der Durchmesser des Borstenstamms 50 an dessen dem Borstenträger 36 abgewandten Ende angegeben.

Die Borsten 34 verjüngen sich vorzugsweise konisch vom Austritt bis zum freien Ende.

Der Vollständigkeit halber sei erwähnt, dass die Aussenkontur des Borstenstamms 50 vorzugsweise kontinuierlich in die Aussenkontur der Endkappe 52 übergeht, eine leicht abgesetzte Aussenkontur ist dennoch möglich. Es sei jedoch erwähnt, dass die Borsten 34 auch beim freien Ende des Borstenstamms 50 enden können; das freie Ende der Borsten 34 wäre in diesem Fall flach ausgebildet.

Geeignete Kunststoffmaterialien für die Kunststoffkomponenten der Handhabe 14 und die Kunststoffkomponente für Borstenträger 36 und Borsten 34 sowie bevorzugte Abmessungen der Borsten 34, der Ausbildung der Borstenbündel 40 und des Borstenträgers 36 sind in der Einleitung angegeben.

Dabei ist es auch möglich, die Handhabe 14 aus mehreren Kunststoffkomponenten herzustellen. Beispielsweise kann die Handhabe 14 neben der Hartkomponente auch weitere Hartkomponenten oder eine oder mehrere Weichkomponenten aufweisen. Weiter ist es auch möglich im Borstenfeld 42 auch weichelastische Elemente aus einer Weichkomponente anzuordnen.

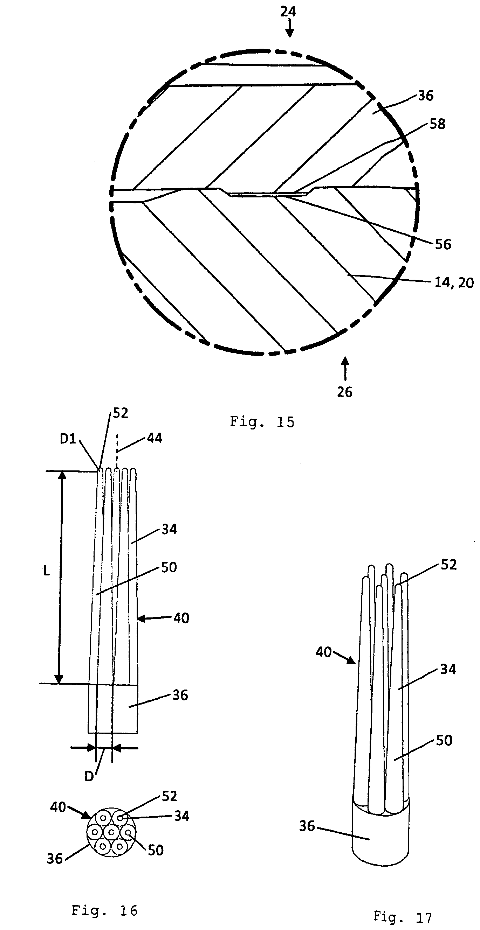

Weiter werden mögliche Ausbildungsformen der Borstenbündel im Zusammenhang mit den Figuren 16 bis 21 weiter unten näher beschrieben.

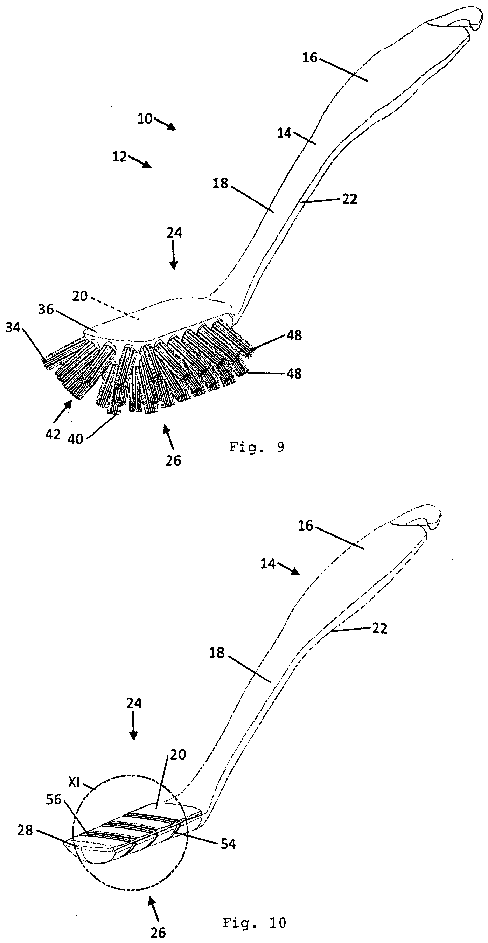

Bei der in den Figuren 9 bis 15 gezeigten Ausführungsform der als Spülbürste 10 ausgebildeten Haushaltsbürste 12 ist der Borstenträger 36 mit den daran integral im Spritzgiessverfahren hergestellten, in Borstenbündeln 40 angeordneten Borsten 34, nicht mehr, wie im oben gezeigten Beispiel, an den Kopfbereich 20 der Handhabe 14 angespritzt sondern separat hergestellt und an diesen montiert.

Die Spülbürste 10 weist wiederum eine Handhabe 14 mit einem Griffbereich 16, einen daran anschliessenden Halsbereich 18 und einen von diesem getragenen Kopfbereich 20 auf, siehe auch Figur 10.

Der Kopfbereich 20 ist wiederum, wie im weiter oben gezeigten Beispiel, geradlinig ausgebildet, wobei sein Querschnitt vom Halsbereich 18 seitigen Ende bis zum freien Endbereich 28 hin ebenfalls leicht verjüngend ausgebildet ist. Dieser Querschnitt ist wiederum kreissegmentartig, wobei der Bogenteil der Bürstenvorderseite 26 zugewandt und der Sehnenteil der Bürstenrückseite 24 zugewandt ist. Der freie Endbereich 28 ist, wiederum räumlich gebogen, ähnlich einem Teil eines Kugelabschnitts, geformt.

Die der Bürstenvorderseite 26 zugewandte Oberfläche des Kopfbereichs 20 ist mit drei in Umfangsrichtung verlaufenden, in Längsrichtung voneinander beabstandeten nutenförmigen Ausnehmungen 54 versehen. Entsprechende nutenartige weitere Ausnehmungen 56 befinden sich in der der Bürstenrückseite 24 zugewandten flachen Seite des Kopfbereichs 20. Diese verlaufen rechtwinklig zur Längsrichtung des Kopfbereichs 20 beziehungsweise in derselben zur Längsrichtung des Kopfbereichs 20 wenigstens annähernd rechtwinklig verlaufenden Ebene, wie die zugeordnete Ausnehmung 54.

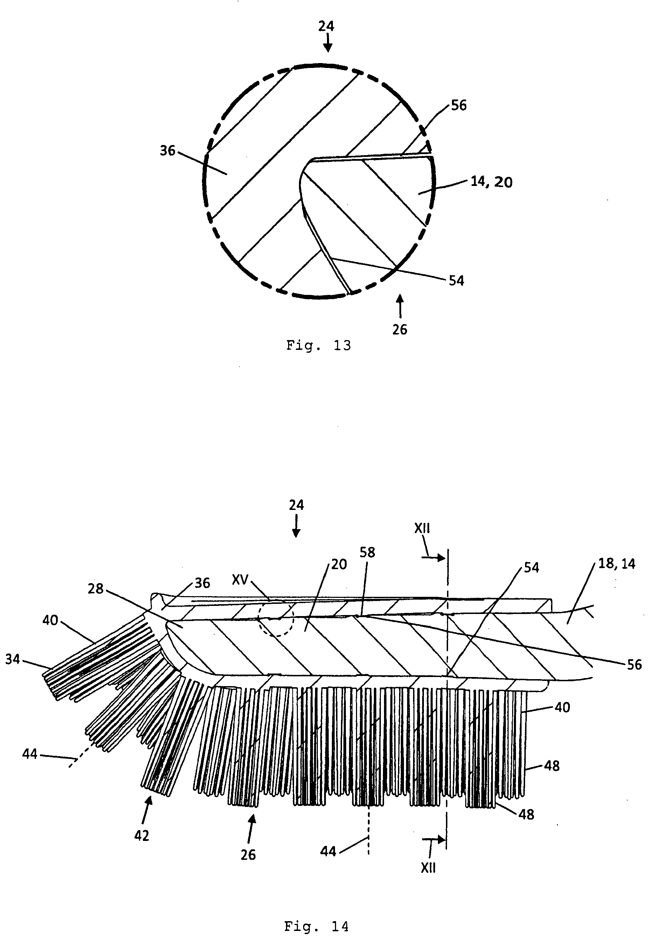

Wie dies insbesondere aus der Figur 13 hervorgeht, verlaufen die Ausnehmung 54 beziehungsweise weiteren Ausnehmungen 56 nicht um den gerundeten Kantenbereich beim Übergang der runden Bürstenvorderseite 26 zugewandten Seite des Kopfbereichs zur flachen der Bürstenrückseite 24 zugewandten Seite. Sondern sie sind an dieser Stelle unterbrochen. Von der Orientierung her sind sie so gestaltet, dass sich die jeweiligen Verlängerungsrichtungen der Ausnehmungen übereinstimmen und sie so eigentlich eine bis auf die Kantenunterbrüche umlaufende Kontur bilden.

Vom freien Ende des Kopfbereichs 20 her gesehen, steigt jeweils die Oberfläche des Kopfbereichs 20 zu den nutenförmigen weiteren Ausnehmungen 56 hin (geringfügig) rampenförmig an, um die Montage des hülsenförmigen Borstenträgers 36 zu erleichtern; siehe insbesondere Figur 15.

Der Borstenträger 36 weist auf seiner Innenseite den Ausnehmungen 54 und weiteren Ausnehmungen 56 entsprechende vorstehende Wülste 58 auf, welche im montierten Zustand in die Ausnehmungen 54 beziehungsweise weiteren Ausnehmungen 56 eingreifen; vergleiche insbesondere Figur 15.

Der Borstenträger 36 ist im Spritzgiessverfahren hülsenförmig ausgebildet, wobei die Innenkontur im Wesentlichen der Aussenkontur des Kopfbereichs 20 der Handhabe 14 entspricht.

Mit dem Borstenträger 36 sind integral die gespritzten Borsten 34 hergestellt, welche genau gleich wie bei der weiter oben beschriebenen Ausführungsform der Spülbürste 10 in Borstenbündeln 40 angeordnet sind.

Das Borstenfeld 42 ist gleich ausgebildet wie beim Ausführungsbeispiel gemäss den Figuren 1 bis 8.

Zur Herstellung der Spülbürste 12 gemäss den Figuren 9 bis 15 wird aus einer oder mehreren Kunststoffkomponenten im Spritzgiessverfahren die Handhabe 14 hergestellt. Getrennt von der Herstellung der Handhabe 14 wird aus mindestens einer weiteren Kunststoffkomponente der Borstenträger 36 integral mit den Borsten 34 im Spritzgiessverfahren hergestellt. Bei der Montage wird jeweils ein Borstenträger 36 mit den gespritzten Borsten 34 vom freien Ende des Kopfbereichs 20 her auf diesen aufgeschoben, bis die Wulste 58 in die Ausnehmungen 54 und weiteren Ausnehmungen 56 eingeschnappt sind. Dazu wird die Elastizität der Kunststoffkomponente des Borstenträgers ausgenützt.

Die Handhabe 14 kann auch aus mehreren Kunststoffkomponenten hergestellt werden, wie dies auch schon in Zusammenhang mit der Handhabe 14 in den Figuren 1 bis 8 beschrieben worden ist.

Die Figuren 16 und 17 zeigen eine erste Form eines Borstenbündels 40 wie es insbesondere bei den erfindungsgemässen Körperpflegebürsten, sprich Applikations-Bürsten 90 verwendet werden kann.

Vom Borstenträger 36 stehen sieben integral mit diesem ausgebildete gespritzte Borsten 34 ab, welche parallel zur Längsrichtung 44 verlaufen, welche ihrerseits rechtwinklig zum Borstenträger 36 verläuft. Die Borsten 34 weisen einen von der Austrittstelle aus dem Borstenträger 36 zum freien Ende sich konisch verjüngenden Borstenstamm 50 auf. Das freie Ende des Borstenstamms 50 trägt eine halbkugelartige Endkappe 52. Die Aussenkonturen von Bürstenstamm 50 und Endkappe 52 gehen stufenlos in einander über.

Die Länge des Borstenstamms ist mit L bezeichnet. Der Durchmesser der Borsten 34 beim Austritt aus dem Borstenträger 36 mit D und der Durchmesser der Borsten 34 beim vom Borstenträger 36 abgewandten Ende des Borstenstamms 50 mit D1. Bevorzugte Längen und Dicken der gespritzten Borsten 34 sind in der Einleitung im Detail angegeben.

Eine der Borsten 34 steht zentrisch des Borstenbündels 40 und die sechs übrigen Borsten sind in Umfangsrichtung gleichmässig verteilt um diese zentrale Borste 34 herum angeordnet.

Beim Austritt aus dem Borstenträger 36 stehen die Borsten 34 sehr nahe beieinander; vorzugsweise berühren sie sich.

Im gezeigten Ausführungsbeispiel ist der Borstenträger 36 ausschliesslich dem einen Borstenbündel 34 zugeordnet. Es ist jedoch auch denkbar, dass der gezeigte Borstenträger 36 ein Teil aus einem mehreren oder allen Borstenbündeln 40 gemeinsamen Borstenträger 36 ist.

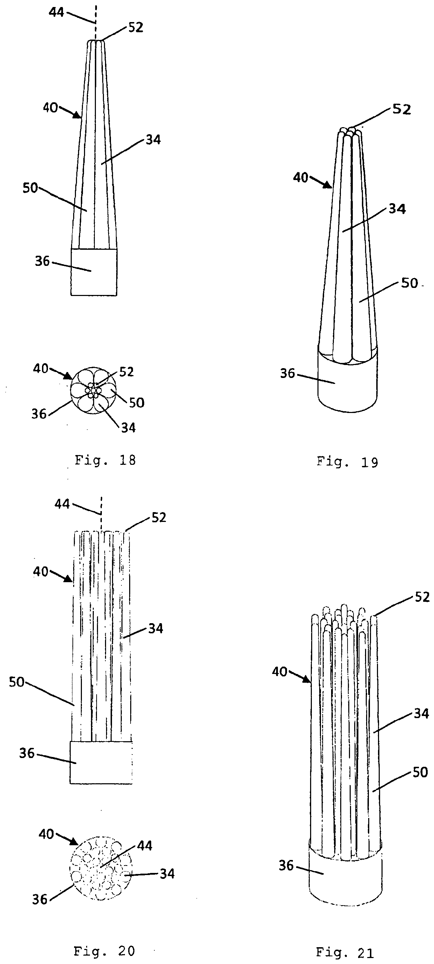

Wird nach dem Spritzgiessen der Borstenbündel 40 zusammen mit dem Borstenträger 36, wie er in den Figuren 16 und 17 gezeigt ist, die Abkühlung derart ausgeführt, dass der Borstenträger 36 bezüglich des Borstenbündels 40 sich im Mittelbereich langsamer abkühlt als radial aussen, führt dies dazu, dass sich der Borstenträger 36 im Mittelbereich in Längsrichtung 44 zusammenzieht. Die Austrittsfläche der Borsten 34 wird konkav gegen innen gewölbt, so dass sich die im Spritzgiesswerkzeug noch parallel zueinander ausgerichteten aussen liegenden Borsten 34, nach dem Entformen wie in den Figuren 18 und 19 gezeigt, mit deren freien Ende aufeinander zu bewegen. Die Borsten 34 bilden im fertigen Zustand quasi eine geschlossene Rosette, wie dies die Draufsicht gemäss Figur 18 zeigt. Bei dieser Ausführungsform ist es denkbar, dass die Borsten 34, beziehungsweise deren Borstenstämme 50, über ihre Länge aneinander anliegen.

Dieses Verhalten bei Abkühlung kann bei Borstenbündeln 40, die gemäss der Beschreibung aus einem Borstenträger 36 pro Borstenbündel 40 bestehen generell erreicht werden. Deshalb ist dies für die Ausführungsform gemäss den Figuren 20 und 21 nicht separat gezeigt.

Die Figuren 20 und 21 zeigen eine Ausführungsform eines Borstenbündels 40 mit 25 integral mit dem Borstenträger 36 gespritzten Borsten 34, das insbesondere für Haushaltsbürsten 12 eingesetzt wird.

Fünf der Borsten sind entlang eines zur Längsrichtung 44 (Längsachse) konzentrischen inneren Kreises gleichmässig verteilt angeordnet. Zehn weitere Borsten sind entlang eines bezüglich des inneren Kreises radial aussen liegenden, ebenfalls zur Längsrichtung 44 (Längsachse) konzentrischen mittleren Kreises in Umfangsrichtung gleichmässig verteilt angeordnet und die restlichen zehn Borsten 34 sind entlang eines bezüglich des mittleren Kreises in radialer Richtung aussen liegenden, zur Längsrichtung 44 (Längsachse) konzentrischen äusseren Kreises gleichmässig verteilt angeordnet.

Im gezeigten Ausführungsbeispiel sind die äussersten Borsten 34 bei der Austrittsstelle aus dem Borstenträger 36 mit einem grösseren Durchmesser ausgebildet als die übrigen Borsten 34.

Die Abmessungen der gespritzten Borsten 34 entsprechen jenen, welche in der Einleitung angegeben sind.

Der Vollständigkeit halber sei bemerkt, dass die einem benachbarten radial innen liegenden Kreis zugeordneten Borsten 34 in Umfangsrichtung gesehen zwischen jeweils zwei benachbarten Borsten 34 angeordnet sind, welche dem benachbarten radial äusseren Kreis zugeordnet sind.

Auch hier berühren sich die Borsten 34 beim Austritt aus dem Borstenträger 36 nahezu.

Der Borstenträger 36 ist wiederum als dem Borstenbündel 40 zugeordneter individueller Borstenträger 36 gezeigt. Es ist jedoch auch möglich, dass der gezeigte Borstenträger 36 ein Ausschnitt aus einem mehreren oder allen Borstenbündeln 40 der Haushaltsbürste, beispielsweise Spülbürste 10 gemeinsamen Borstenträger 36 ist.

Wird eine Haushaltsbürste 12, insbesondere Spülbürste 10 oder eine Applikator-Bürste 90 mit Borstenbündeln 40 mit individuellen Borstenträgern 36 hergestellt, wird vorzugsweise zuerst die Handhabe 14 aus Kunststoff gespritzt. Dabei kann die Handhabe 14 aus einer oder mehreren Hartkomponenten und mit einer oder mehreren Weichkomponenten gespritzt sein. An dieser sind Ausnehmungen vorhanden, welche zur Aufnahme der Borstenträger 36 bestimmt sind. Weiter können in der Handhabe 14, insbesondere in deren Kopfbereich 20, von einem Anspritzpunkt zu den Ausnehmungen verlaufende Zuführkanäle vorgesehen sein, durch welche die zweite Kunststoffkomponente für die Herstellung der Borstenträger 36 und der integral mit diesen auszubildenden Borsten 34 zugeführt werden kann. Die Handhabe 14 wird nach ihrer Herstellung in eine andere Kavität umgelegt, welche der Herstellung der Borstenträger 36 und der gespritzten Borsten 34 dient.

Es ist jedoch auch möglich, zuerst die Borstenbündel 40 mit ihren individuellen Borstenträger 36 im Spritzgiessverfahren herzustellen, dann in eine Kavität für die Herstellung der Handhabe 14 zu verbringen und dann die Handhabe 14 derart zu spritzen, dass das Kunststoffmaterial der Handhabe 14 um die Borstenträger 36 fliesst.

Weiter besteht die Möglichkeit, dass Handhabe 14 und Borstenbündel 40 separat hergestellt und anschliessend montiert werden. Ein relativ aufwändiges Verfahren als Ganzes, es kann aber durchaus sein, dass dadurch die Spritzgiesswerkzeuge wesentlich einfacher gestaltet werden können.

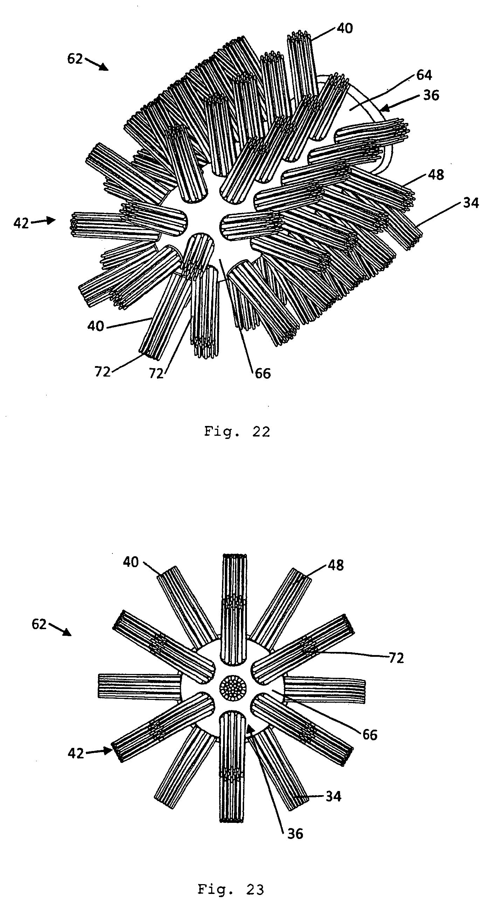

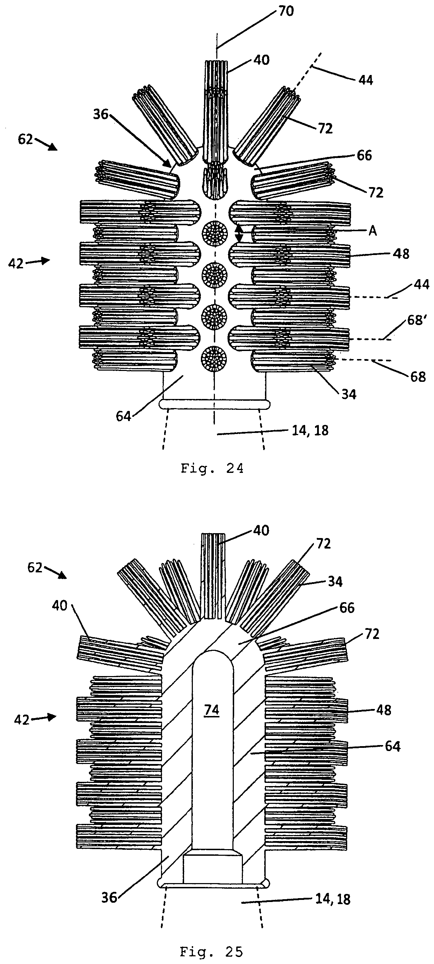

Die Figuren 22 bis 25 zeigen eine Ausführungsform einer als WC-Bürste 62 ausgebildeten Haushaltsbürste 12. In den Figuren ist nur das Borstenfeld dargestellt, ausser in Figur 24 und 25, wo auch die stilartige Handhabe 14 angedeutet ist.

Der Borstenträger 36 ist hülsenförmig ausgebildet und weist einen geradlinigen, hohlzylinderförmigen Abschnitt 64 und einen daran integral anschliessenden halbkugelförmigen Endabschnitt 66 auf.

Im hohlzylinderförmigen Abschnitt 64 sind jeweils vier Borstenbündel 40 in einer Reihe 48 angeordnet, wobei die Reihen in Längsrichtung des hohlzylinderförmigen Abschnitts 64 verlaufen und 12 Reihen in Umfangsrichtung gleichmässig verteilt vorhanden sind. Die Anzahl der Borstenbündel pro Reihe kann variiert werden, sie beträgt 3 bis 12 Borstenbündel, vorzugsweise 4 bis 8 Borstenbündel 40. Die Anzahl der Reihen in Umfangsrichtung beträgt 4 bis 16 vorzugsweise 8 bis 14. Die Abstände zwischen den Borstenbündeln können entsprechend angepasst sein.

Die gezeigten Borstenbündel sind, wie in den Figuren 20 und 21 gezeigt, ausgebildet und stehen radial vom allen Borstenbündeln 40 gemeinsamen Borstenträger 36 ab.

Die Borstenbündel 40 jeder zweiten Reihe, beziehungsweise deren Längsrichtung 44 (Längsachse), sind in rechtwinklig zur Längsrichtung der WC-Bürste 62 (d.h. zur Achse 70) verlaufenden und in Längsrichtung der WC-Bürste 62 (d.h. zur Achse 70) voneinander beabstandeten Borstenebenen 68 angeordnet. Die Borstenbündel 40 der übrigen Reihen 48 sind jeweils in Borstenebenen 68' angeordnet, welche in Längsrichtung um den halben Abstand der Borstenebenen 68 zu diesen versetzt angeordnet sind. Die Borstenbündel 40 der Borstenebenen 68' sind gegenüber den Borstenbündeln 40 der Borstenebenen 68 versetzt angeordnet.

Im Endabschnitt 66 fällt die Längsrichtung 44 eines Borstenbündels 40 mit der Achse 70 des Borstenträgers 36 zusammen. Zwischen diesem Borstenbündel 40 und den Reihen 48 von Borstenbündeln 40 befinden sich zwei Kränze 72 von im gezeigten Ausführungsbeispiel je sechs Borstenbündeln 40, welche mit ihrer Längsrichtung 44 in radialer Richtung zum kugelförmigen Endabschnitt 66 vom Borstenträger 36 (strahlenartig) abstehen.

Auch bei dieser Ausführungsform sind die Borstenbündel 40 um den Bündelabstand A voneinander beabstandet.

Der durch die hohlzylindrische Form des Borstenträgers 36 gebildete Innenraum 74 ist zur Aufnahme eines zylinderförmigen Kopfbereichs 20 der Handhabe 14 bestimmt, deren Halsbereich und Griffbereich einen beispielsweise geradlinigen Stiel bilden. Es ist jedoch auch denkbar, dass der Stiel gebogen ist.

Im offenen Endbereich ist die Wandstärke des Borstenträgers 36 bevorzugt dünner ausgebildet als im übrigen Bereich. Entsprechend weist die Handhabe 14 vorzugsweise eine entsprechende Vergrösserung des Durchmessers auf, um in Folge der Elastizität der Kunststoffkomponenten einen ausreichenden Kraftschluss zwischen der Handhabe 14 und dem Borstenträger 36 mit den integral ausgebildeten Borsten 34 zu erreichen.

Es ist aber auch möglich, im hohlzylinderförmigen Abschnitt 64 ein Gewinde auszubilden, in welches eine Handhabe 14 mit einem entsprechenden Gegengewinde eingeschraubt werden kann. Im besagten hohlzylinderförmigen Abschnitt 64 können aber auch andere Geometrien integriert sein, die ein Befestigen der Handhabe 14 ermöglichen, beispielsweise durch Schnapper.

Jegliche Verbindungen zwischen der Handhabe 14 und dem Borstenträger 36 können entweder lösbar oder unlösbar gestaltet werden. So kann neben den bereits genannten Verbindungsvarianten auch ein Kleben passieren oder auch eine Einmalmontage mit Geometrien, die sich unlösbar verbinden. Eine lösbare Verbindung bringt mit sich, dass die Bürstenköpfe ersetzt werden können, das heisst, dass die Handhabe 14 mehrmals verwendet werden kann.

Daneben ist es auch möglich, den Borstenteil direkt an die Handhabe anzuspritzen. Auf diese Weise entsteht eine WC-Bürste 62, bei welcher alles spritzgegossen und unlösbar verbunden ist.

Die Herstellung des Borstenträgers 36 der WC-Bürste 62 erfolgt im Spritzgiessverfahren analog der Spülbürste 12, wie es später beschrieben wird. Der Unterschied liegt darin, dass bei der WC-Bürste das Spritzgiesswerkzeug einen höheren Grad an Komplexität aufweist, da rund um den Borstenträger 36 Borstenbündel 40 mit Borsten 34 angeordnet sind.

Alternativ kann eine WC-Bürste 62 durch die Montage mehrerer Borstenträger erreicht werden. So ist es möglich mehrere Borstenträger zu formen, die die Form des Kopfbereichs einer überdimensionierten Spülbürste haben. Durch eine geeignete Handhabe und die entsprechende Formung des Borstenträgers können diese Element Rücken an Rücken montiert werden, sodass ebenfalls eine Haushaltsbürste entsteht, die rund um ihren Umfang Borsten besitzt. Durch die Montage kann erreicht werden, dass gleichgeformte Borstenträger zwei oder mehrmals an die selbe Handhabe montiert werden. Das Spritzgiesswerkzeug wird entsprechend einfacher, weil nicht rund um den Borstenträger Borsten angebracht sind, die entformt werden müssen.

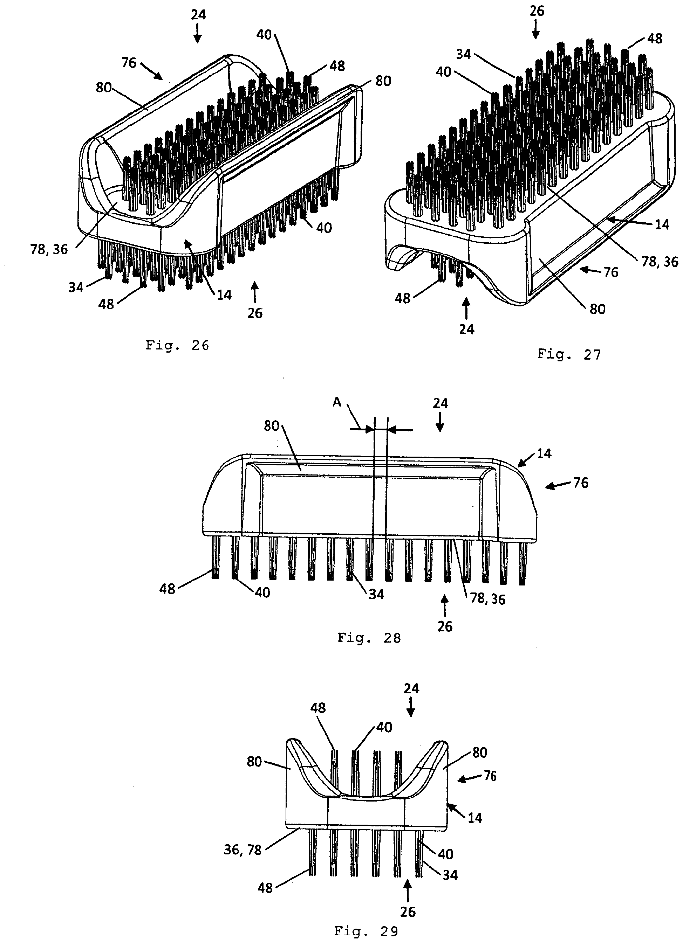

Die Figuren 26 bis 29 zeigen eine als Nagelbürste 76 ausgebildete Ausführungsform der erfindungsgemässen Haushaltsbürste 12.

Die Handhabe 14 weist einen flächigen, annähernd rechteckförmigen Boden 78 auf, von welchem entlang den Längsseiten Haltewände 80 abstehen.

Zwischen den Haltewänden 80 befinden sich vier Reihen 48 von Borstenbündeln 40, welche der Bürstenrückseite 24 zugeordnet sind.

Auf der gegenüberliegenden Bürstenvorderseite 26 stehen vom Boden 78 sechs Reihen 48 von weiteren Borstenbündeln 40 ab.

Im gezeigten Ausführungsbeispiel bestehen die Handhabe 14 und die gespritzten Borsten 34 der Borstenbündel 40 aus derselben Kunststoffkomponente. Die Handhabe 14 selber, beziehungsweise deren Boden 78, bildet somit den Borstenträger 36 für alle Borstenbündel 40.

Auch bei dieser Ausführungsform sind die Borsten 34 und Borstenbündel 40 derart ausgebildet, wie weiter oben beschrieben. Weiter sind auch hier die Borstenbündel 40 in einem Borstenabstand A zueinander angeordnet.

Die Längen der Borsten 34 sind vorzugsweise auf beiden Seiten der Nagelbürste 76 gleich. Weiter werden vorzugsweise auf beiden Seiten identische Borstenbündel 40 gebildet.

Aus funktionalen Gründen ist es dennoch möglich, unterschiedliche Borstenbündel 40 einzusetzen, damit zwei verschiedene Stärken der entsprechenden Borstenfelder 42 erreicht werden können, beispielsweise je eines für die Grobreinigung und die Feinreinigung.

Die Höhe der Haltewände 80 zwischen dem Boden 78 und dem freien Ende der Haltewand beträgt zwischen 15 mm und 30 mm vorzugsweise zwischen 18 mm und 25 mm.

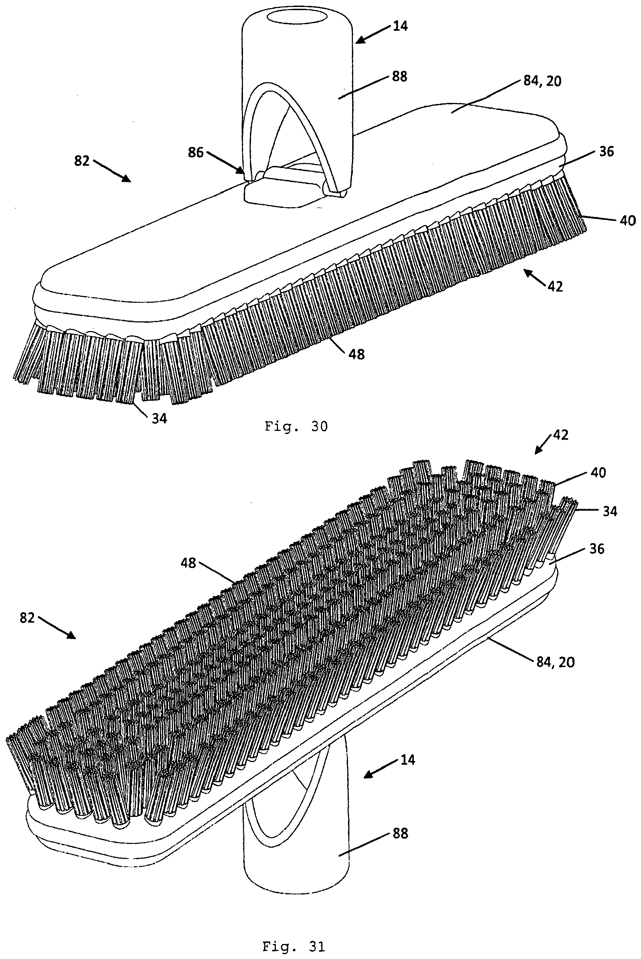

Die Figuren 30 bis 34 zeigen den Kehrkopf einer erfindungsgemässen als Besen 82 ausgebildeten Haushaltsbürste 12.

Der Kehrkopf weist einen als Kopfbereich 20 der Handhabe 14 dienenden Riegel 84 auf. Dieser ist im Spritzgiessverfahren aus mindestens einer Kunststoffkomponente hergestellt.

Auf der dem Borstenfeld 42 abgewandten Seite - der Bürstenrückseite 24 - trägt der Riegel 84 einen Gelenkstielhalter 86 in dessen Gelenkhülse 88 in bekannter Art und Weise ein Stiel befestigbar ist.

An den Riegel 84 ist auf der dem Borstenfeld 42 zugewandten Seite - der Bürstenvorderseite 26 - als flächige Schicht der Borstenträger 36 angespritzt, welcher sich um die abgerundeten Seitenkanten des Riegels 84 herum bis etwa auf die Mitte der Höhe der Seitenwände des Riegels 84 erstreckt.

Alternativ können Riegel 84 und Borstenträger 36 integral als ein Stück geformt werden.

Im gezeigten Ausführungsbeispiel weist das Borstenfeld 42 drei in Längsrichtung des Borstenfeldes 24 und des Borstenträgers 36 verlaufende, parallele Reihen 48 von Borstenbündeln 40 auf, mit im gezeigten Ausführungsbeispiel je 29 Borstenbündeln 40. Diese Borstenbündel 40 stehen senkrecht vom Borstenträger 36 ab.

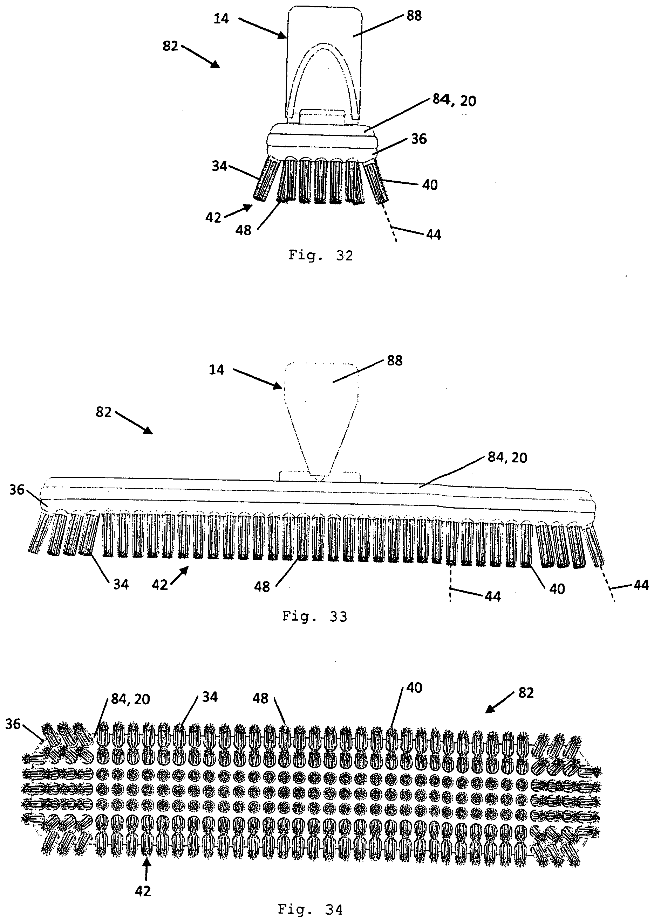

Auf beiden Seiten dieser Reihen 48 verlaufen je zwei weitere Reihen von Borstenbündeln 40. Die Längsrichtung 44 dieser Borstenbündel 40 ist jedoch, in Längsrichtung des Riegels 84 gesehen (siehe insbesondere Figur 32), schräg nach aussen gerichtet.

In Längsrichtung anschliessend an die beschriebenen Reihen 48 von Borstenbündeln 40 befinden sich jeweils - noch im ebenen Bereich des Riegels 84 - weitere Borstenbündel 40, in gezeigtem Beispiel jeweils 4, deren Längsrichtung 44 auch in Ansicht gesehen (Figur 33) schräg nach aussen gerichtet ist.

Weiter befinden sich die in Längsrichtung äussersten Borstenbündel 40 im Bereich der abgerundeten Kante des Riegels 84.

Auch hier sind die Borsten 34 und die Borstenbündel 40 derart ausgebildet wie weiter oben beschrieben. Die Borstenbündel 40 sind im Bündelabstand A zueinander angeordnet.

Beim Besen 82 weisen die Borsten 34 bevorzugt eine Länge L auf, welche beim grösseren Ende der in der Einleitung erwähnten bevorzugten Längenangaben liegt.

Die Bündelabstände A sind im Wesentlichen identisch mit den für die Haushaltsbürste genannten.

Der Riegel 84 hat eine Länge von 23 cm bis 33 cm vorzugsweise zwischen 25 cm und 30 cm. Die Breite des Riegels 84 beträgt zwischen 4 cm und 8 cm, vorzugweise zwischen 5 cm und 7 cm.

Bei einer Ausbildung des Kehrgerätekopfs als Schrubber, was ebenfalls möglich ist, bleibt der Bereich der Breite identisch, die Länge ist jedoch anders. Bei einem Schrubber beträgt die Länge zwischen 15 cm und 25 cm vorzugsweise 18 cm bis 22 cm.

Selbstverständlich ist es auch möglich, beim Besen 82 alle Borstenbündel 40 derart anzuordnen, dass ihre Längsrichtungen 44 parallel zueinander und bevorzugt rechtwinklig zum Riegel 84 verlaufen.

Weiter sei an dieser Stelle erwähnt, dass es möglich ist, neben den gespritzten Borsten 34 im Riegel 84 auch in bekannter Art und Weise konventionelle Borsten beziehungsweise Borstenbündel anzubringen.

Selbstverständlich kann die Anzahl von Reihen 48 und die Anzahl von Borstenbündel 40 pro Reihe unterschiedlich sein.

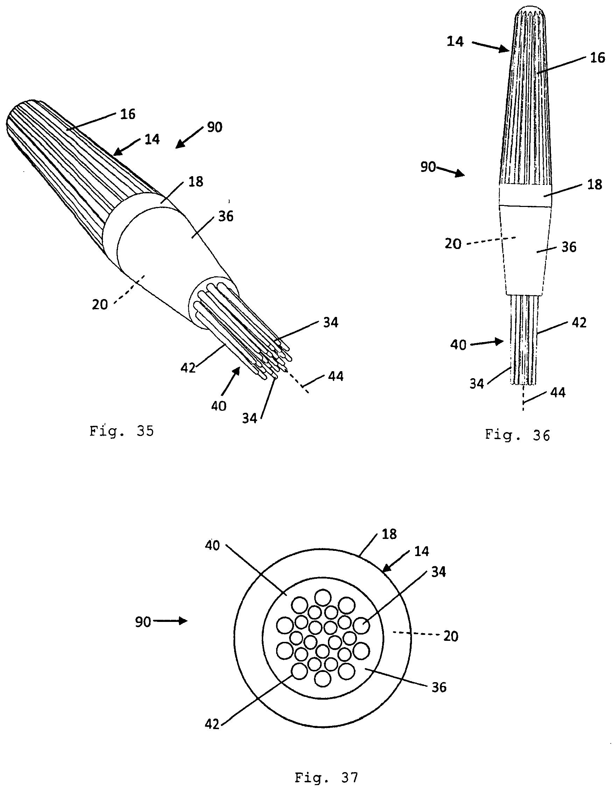

Die Figuren 35 bis 37, 38 bis 40, 41 bis 44 und 45 bis 48 zeigen je eine als Applikator-Bürste ausgebildete Körperpflegebürste, wie sie beispielsweise für die Applikation von Kosmetikas, Haarpflegeprodukten oder von Medizinalprodukten verwendet werden können. Beispiele für Kosmetikas sind Nagellacke oder Mascara. Im Bereich der Haarpflegeprodukte können beispielsweise Haarfärbungen appliziert werden.

Die Figuren 35 bis 37 zeigen eine Applikator-Bürste 90 mit einem einzigen Borstenbündel 40, dessen Borsten 34 integral mit dem Borstenträger 36 im Spritzgiessverfahren hergestellt sind.

Im gezeigten Ausführungsbeispiel fällt die Längsrichtung 44 des Borstenbündels 40 mit der Längsachse der Handhabe 14 zusammen.

Im gezeigten Ausführungsbeispiel ist das Borstenbündel 40 gleich ausgebildet, wie in den Figuren 20 und 21 gezeigt und weiter oben beschrieben; selbstverständlich sind auch unterschiedliche Ausbildungsformen des Borstenbündels 40 möglich, beispielsweise wie in den Figuren 16 bis 19 gezeigt.

Die Handhabe weist einen Kopfbereich 20 auf, welcher sich vom Borstenbündel 40 her gesehen konisch erweitert, anschliessend einen kreiszylinderförmigen Abschnitt als Halsbereich 18 und an diesen anschliessend einen Griffbereich 16 aufweist, welcher konisch verjüngend ausgebildet ist.

Der Kopfbereich 20 ist mit der Kunststoffkomponente des Borstenträgers 36 umspritzt, mit welchem integral die Borsten 34 des Borstenbündels 40 ausgebildet sind und welche von jenem von der Stirnseite her abstehen.

Auch hier ist es möglich, dass die gesamte Applikator-Bürste 90 aus der Kunststoffkomponente des Borstenträgers 36 und der Borsten 34 ausgebildet ist. In diesem Fall ist die Applikator-Bürste 90 in einem einzigen Spritzgiessschritt herstellbar.

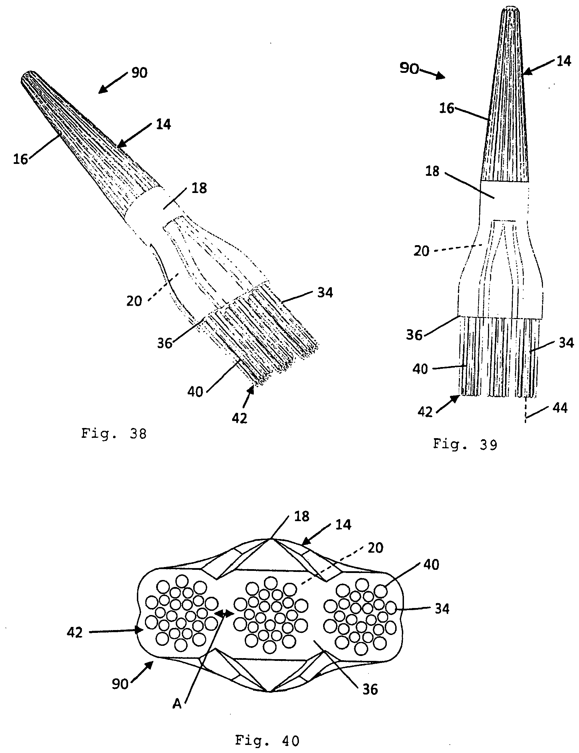

Eine weitere Ausführungsform einer Applikator-Bürste 90 ist in den Figuren 38 bis 40 gezeigt. Diese weist drei Borstenbündel 40 auf, welche in einer Reihe 48 hintereinander angeordnet sind und deren Längsrichtung 44 parallel zur Längsachse der Handhabe 14 verlaufen.

Im gezeigten Ausführungsbeispiel sind die Borstenbündel 40 gleich ausgebildet wie das Borstenbündel der Ausführungsform gemäss den Figuren 35 bis 37. Selbstverständlich sind auch unterschiedliche Ausbildungsformen des Borstenbündels 40 möglich, beispielsweise wie in den Figuren 16 bis 19 gezeigt. Es ist auch möglich unterschiedliche Formen von Borstenbündeln 40 zu verwenden, vorzugsweise sind die Borstenbündel jedoch identisch.

Der Griffbereich 16 ist vom freien Ende her in Richtung zu den Borstenbündeln 40 konisch erweitert ausgebildet und an ihn schliesst ein kreiszylinderförmiger Halsbereich 18 an. An den Halsbereich 18 schliesst andererseits der Kopfbereich 20 an, welcher, in Ansicht gesehen, trapezförmig erweitert ausgebildet ist, in Seitenansicht gesehen sich jedoch zum borstenseitigen Ende hin verjüngt.

Der Kopfbereich 20 ist mit der Kunststoffkomponente für den Borstenträger 36, diesen bildend umspritzt und integral mit dem Borstenträger 36 sind die Borsten 34 der drei Borstenbündel 40 im Spritzgiessverfahren ausgebildet.

Auch bei dieser Ausführungsform ist es möglich, dass die Handhabe 14 und der Borstenträger 36 sowie die Borsten 34 aus ein und derselben Kunststoffkomponente hergestellt sind. Sowohl bei der Ausführungsform gemäss den Figuren 35 bis 37 wie auch bei der vorliegenden Ausführungsform ist dann der Borstenträger 36 durch die Handhabe 14 selber gegeben.

Auch hier sind die Borstenbündel 40 im Bündelabstand A zu einander angeordnet und sind sie, beziehungsweise ihre Borsten 34, derart ausgebildet wie weiter oben offenbart.

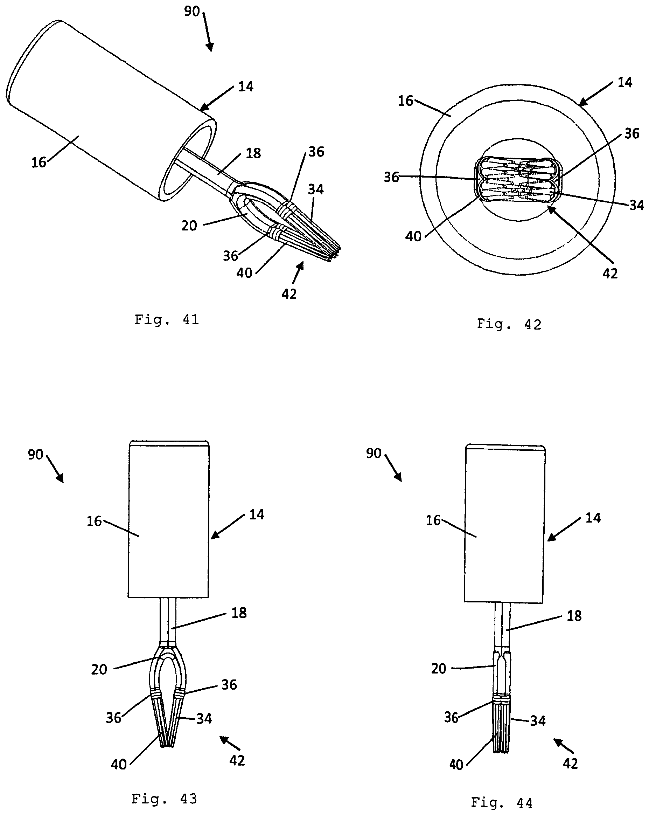

Die Figuren 41 bis 44 zeigen eine Applikator-Bürste 90 mit vier Borstenbündeln 40, deren Borsten 34 integral mit den Borstenträgern 36 im Spritzgiessverfahren hergestellt sind.

Je zwei Borstenbündel 40 sind im gezeigten Ausführungsbeispiel an einem gemeinsamen Borstenträger 36 ausgebildet. Diese Borstenträger 36 sind je an einem Arm des U-förmig ausgebildeten Kopfbereichs 20 der Handhabe 14 angeordnet.

Die Borstenbündel 40 sind im gezeigten Ausführungsbeispiel so ausgerichtet, dass sich ihre Längsachsen 44 schneiden bzw. dass die freien Endbereiche der Borstenbündel 40 sich durchmischen. Dies kann beispielsweise durch den Abkühlungsprozess im Spritzgiessen erreicht werden, durch eine Montage der Borstenbündel 40 an den Armen oder durch eine Nachbearbeitung, beispielsweise durch eine Umformung der Arme.

Im gezeigten Ausführungsbeispiel sind die Borstenbündel 40 gleich ausgebildet, wie in den Figuren 16 und 17 gezeigt und weiter oben beschrieben; selbstverständlich sind auch unterschiedliche Ausbildungsformen des Borstenbündels 40 möglich, beispielsweise wie in den Figuren 18 bis 19 oder 20 und 21 gezeigt.

Die Handhabe 14 ist so gestaltet, dass der Griffbereich 16 zugleich als Verschluss für ein Gefäss mit einem zu applizierenden Medium dienen kann. Anschliessend an den Griffbereich folgt ein Halsbereich 18, welcher im vorliegenden Fall als zylindrischer Körper ausgestaltet ist, wiederum so, dass er in das besagte Gefäss mit dem zu applizierenden Medium eingeführt werden kann. Direkt anschliessend ist der Kopfbereich 20 ausgebildet, welcher aus den zwei Armen besteht, die jeweils an ihren Enden Borstenträger 36 aufweisen, die integral die Borstenbündel 40 tragen.

Der Kopfbereich 20 ist mit der Kunststoffkomponente des Borstenträgers 36 umspritzt, mit welchem integral die Borsten 34 des Borstenbündels 40 ausgebildet sind und welche von jenem von der Stirnseite her abstehen.

Auch hier ist es möglich, dass die gesamte Applikator-Bürste 90 aus der Kunststoffkomponente des Borstenträgers 36 und der Borsten 34 ausgebildet ist. In diesem Fall ist die Applikator-Bürste 90 in einem einzigen Spritzgiessschritt herstellbar.

Auch hier sind die Borstenbündel 40 im Bündelabstand A zu einander angeordnet und sind sie, beziehungsweise ihre Borsten 34, derart ausgebildet wie weiter oben offenbart.

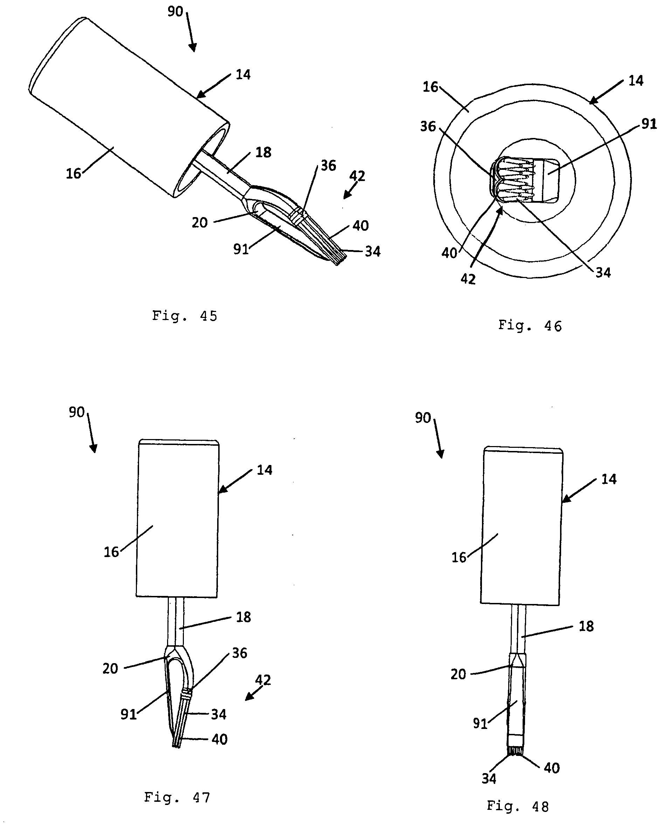

Die Figuren 45 bis 48 zeigen eine Applikator-Bürste 90 mit zwei Borstenbündeln 40, deren Borsten 34 integral mit dem Borstenträger 36 im Spritzgiessverfahren hergestellt sind, und einer Stützfläche 91, welche die Borstenbündel 40 mindestens teilweise stützt.

Die Borstenbündel 40 sind im gezeigten Ausführungsbeispiel auf einem gemeinsamen Borstenträger 36 ausgebildet. Der Kopfbereich 20 der Handhabe 14 besteht wiederum aus zwei Armen. Auf dem einen Arm ist der Borstenträger 36 ausgebildet, auf dem anderen, flächenartig ausgebildeten Arm, die Stützfläche 91.

Die Borstenbündel 40 sind so ausgerichtet, dass sich ihre Längsachse 44 mit der Längsachse der Stützfläche 91 schneidet. Die Borstenbündel 40 und die Stützfläche 91 liegen aneinander oder beinahe aneinander an. Dies kann beispielsweise durch den Abkühlungsprozess im Spritzgiessen erreicht werden, oder durch eine Montage der Borstenbündel 40 auf dem betreffenden Arm, oder durch eine Nachbearbeitung, beispielsweise durch eine Umformung des Kopfbereiches 20.

Im gezeigten Ausführungsbeispiel sind die Borstenbündel 40 gleich ausgebildet, wie in den Figuren 16 und 17 gezeigt und weiter oben beschrieben; selbstverständlich sind auch unterschiedliche Ausbildungsformen des Borstenbündels 40 möglich, beispielsweise wie in den Figuren 18 bis 19 oder 20 und 21 gezeigt.

Die Handhabe 14 ist so gestaltet, dass der Griffbereich 16 zugleich als Verschluss für ein Gefäss mit einem zu applizierenden Medium dienen kann. Anschliessend an den Griffbereich 16 folgt ein Halsbereich 18 der Bürste, welcher im vorliegenden Fall als zylindrischer Körper ausgestaltet ist, wiederum so, dass er in das besagte Gefäss mit dem zu applizierenden Medium eingeführt werden kann. Direkt anschliessend ist der Kopfbereich 20 ausgebildet, welcher aus den zwei Armen besteht, die jeweils an ihren Enden den Borstenträger 36 beziehungsweise die Stützfläche 91 tragen.

Der Kopfbereich 20 ist mit der Kunststoffkomponente des Borstenträgers 36 umspritzt, mit welchem integral die Borsten 34 des Borstenbündels 40 und die Stützfläche 91 ausgebildet sind und welche von jenem von der Stirnseite her abstehen.

Auch hier ist es möglich, dass die gesamte Applikator-Bürste 90 aus der Kunststoffkomponente des Borstenträgers 36 und der Borsten 34 ausgebildet ist. In diesem Fall ist die Applikator-Bürste 90 in einem einzigen Spritzgiessschritt herstellbar.

Auch hier sind die Borstenbündel 40 im Bündelabstand A zu einander angeordnet und sind sie, beziehungsweise ihre Borsten 34, derart ausgebildet wie weiter oben offenbart. Die Stützfläche 91 kann verschiedene Funktionen erfüllen. Zum einen stützt die Stützfläche 91 die Borsten 34 in der Anwendung, das heisst die Borsten 34 werden bei Belastung an die Stützfläche 91 angedrückt. Dadurch kann eine längere Lebensdauer der Borsten 34 erreicht werden. Andererseits kann durch die Stützfläche 91 ein gewisses Reservoir für das zu applizierende Medium geschaffen werden. Dieses kann sich zwischen den Borsten 34 und der Stützfläche 91 sammeln und wird durch die Borsten 34 nach und nach abgegeben.

Bei den in Figuren 41 bis 48 gezeigten Applikator-Bürsten 90 ist es selbstverständlich möglich, den Griffbereich 16 und den Halsbereich 18 anders zu gestalten, beispielsweise in der Art wie er in den Figuren 35 bis 40 gezeigt ist.

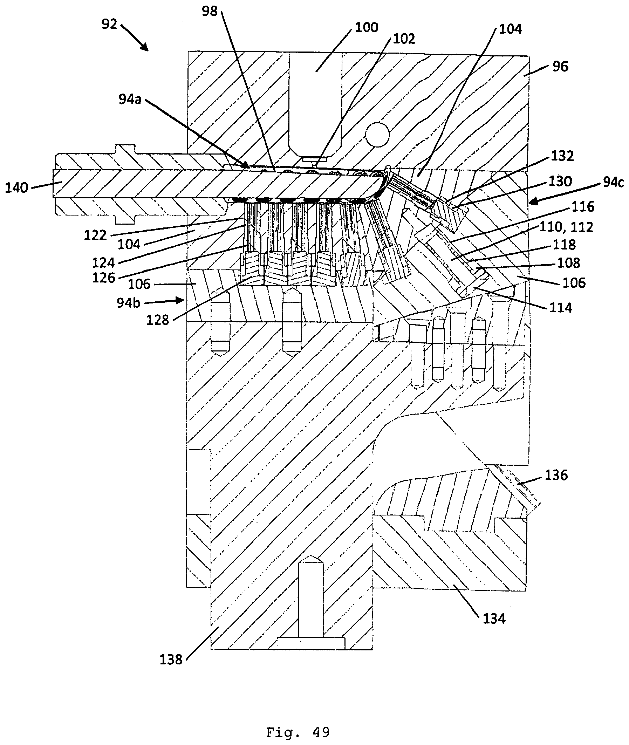

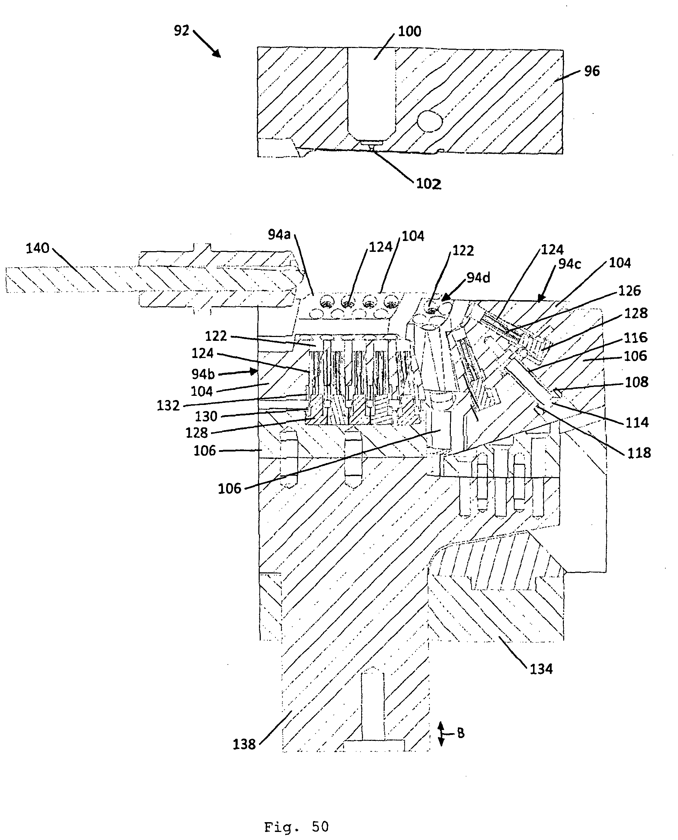

Ein Spritzgiesswerkzeug 92 zur Herstellung des Borstenträgers 36 und der Borstenbündel 40 für die Spülbürste 10, wie sie in den Figuren 9 bis 14 gezeigt und weiter oben beschrieben ist, ist in den Figuren 49 und 50 dargestellt.

An dieser Stelle sei erwähnt, dass dieselbe Art von Spritzgiesswerkzeugen 92 immer dann bevorzugt verwendet wird, wenn mittels eines Werkzeugteils 94 Borstenbündel 40 herzustellen sind, deren Längsrichtungen 44 nicht parallel zueinander verlaufen.

Derartige Spritzgiesswerkzeuge 92 sind insbesondere für das Herstellen von Haushaltsbürsten gemäss den Figuren 1 bis 15, 22 bis 25 und 30 bis 34 geeignet.

Das Spritzgiesswerkzeug 92 weist einen plattenartigen stationären Werkzeugteil 96 auf. Dieser ist bevorzugt düsenseitig angeordnet. Es begrenzt die Kavität 98 für die Herstellung des Borstenträgers 36 und der in Borstenbündeln 40 angeordneten Borsten 34 auf der Bürstenrückseite 24. Das stationäre Werkzeugteil 96 ist mit einer Ausnehmung 100 für die Anordnung des Heisskanals und einem Zuführkanal 102 für die Einspritzdüse zum Zuführen der Kunststoffkomponente für die Herstellung des Borstenträgers 36 und der gespritzten Borsten 34 in die Kavität 98 ausgebildet. Dieser Zuführkanal 102 beziehungsweise die zugehörige Einspritzdüse definiert den Anspritzpunkt.

Zum Begrenzen der Kavität 98 auf der Bürstenvorderseite 26 weist das Spritzgiesswerkzeug 92 sechs Werkzeugteile 94 auf. Jedes dieser Werkzeugteile 94 weist einen Aufnahmekörper 104 auf, welcher die Kavität 98 begrenzt. Jedem dieser Aufnahmekörper 104 ist (auf der der Kavität 98 abgewandten Seite) ein Stützkörper 106 zugeordnet, wobei die Stützkörper 106 in Schliessstellung des Spritzgiesswerkzeugs 92 die Aufnahmekörper 104 abstützen. Weiter ist zwischen jeweils dem Aufnahmekörper 104 und dem zugeordneten Stützkörper 106 eine Schleppverbindung 108 angeordnet, welche beim Öffnen des Spritzgiesswerkzeugs 92 über einen Öffnungshubbereich (in einem Öffnungsschritt) eine Relativbewegung zwischen dem Aufnahmekörper 104 und dem Stützkörper 106 zulässt und im restlichen Bereich des Öffnungshubs (in einem nachfolgenden Öffnungsschritt) den Aufnahmekörper 104 zusammen mit dem Stützkörper 106 in entsprechender Öffnungsrichtung mitnimmt und vom gespritzten Körper weg bewegt.

Im gezeigten Ausführungsbeispiel ist die Schleppverbindung 108 derart ausgebildet, dass sie eine in Richtung der gemeinsamen Bewegung des Aufnahmekörpers 104 und Stützkörpers 106 verlaufende Schraube 110 aufweist, deren Schaft 112 eine durchgehende Bohrung 116 im Stützkörper 106 durchgreift und in den Aufnahmekörper 104 verschraubt ist.

Der Kopf 114 der Schraube 110 ist in der Bohrung 116 angeordnet, wobei diese eine Stützschulter 118 aufweist, an welcher nach dem Öffnungsschritt der Kopf 114 der Schraube 110 - gegebenenfalls über Federringe - zur Anlage gelangt, um den Aufnahmekörper 104 im nachfolgenden Öffnungsschritt in Schleppverbindung mitzubewegen; siehe Figur 50. In Schliessstellung des Spritzgiesswerkzeugs 92 ist der Kopf 114 von der Stützschulter 118 abgehoben (siehe Figur 49).

Die Aufnahmekörper 104 verbleiben im genannten Öffnungsschritt in Schliessstellung. Dies wird durch einen nicht gezeigten Mechanismus erreicht.

Die Werkzeugteile 94 weisen pro zugeordnetem Borstenbündel 40 einen Durchlass 122 auf, dessen Längsachse mit der Längsrichtung 44 des betreffenden zu bildenden Borstenbündels 40 zusammenfällt. Diese Durchlässe 122 sind bevorzugt kreiszylinderförmig ausgebildet.

In jedem der Durchlässe 122 befindet sich ein Werkzeugeinsatz 124, in welchem die Borstenkavitäten 126 für die Herstellung der gespritzten Borsten 34 des betreffenden Borstenbündels 40 ausgebildet sind.

Die Werkzeugeinsätze 124 sind in den Durchlässen 122 in einer derartigen Gleitpassung verschiebbar gelagert, dass beim Spritzgiessen kein Kunststoff zwischen die Aufnahmekörper 104 und die Werkzeugeinsätze 124 eindringen kann.

Auf der der Kavität 98 abgewandten Seite sind die Werkzeugeinsätze 124 von je einem pilzförmig ausgebildeten Stützelement 128 abgestützt, welches mit seinem Stamm in eine entsprechende Öffnung des Werkzeugeinsatzes 124 eingreift und mit seinem Kopf andererseits am Stützkörper 106 anliegt.

Die Werkzeugeinsätze 124 weisen am diesseitigen Ende einen nach radial aussen vorstehenden Flanschabschnitt 130 auf, an welchem sich eine Schraubendruckfeder 132 mit einem Ende abstützt. Mit dem anderen Ende stützt sich die Schraubendruckfeder 132 am Aufnahmekörper 104 ab.

Die Köpfe der Stützelemente 128 und die Flanschabschnitte 130 der Borstenkavitäten 126 bzw. Werkzeugeinsätze 124 sind mit seitlichem Spiel in betreffenden sacklochartigen Ausnehmungen der Stützkörper 106 aufgenommen. Damit können sie sich auf ihrer Längsachse bewegen, auch wenn der Stützkörper 106 eine andere Bewegungsrichtung hat.

Die Werkzeugeinsätze 124 weisen pro zu spritzende Borste 34 des Borstenbündels 40 eine durchgehende Borstenkavität auf, welche sich in Richtung von der Kavität 98 nach aussen, d.h. in Richtung zum Stützelement 128 hin, konisch verjüngt. Die Borstenkavitäten 126 können im Drahterodier-Verfahren hergestellt werden und ihre Oberfläche wird vorzugsweise nicht behandelt. Ihre Abmessungen ergeben sich aus den Abmessungen der zu spritzenden Borsten 34; entsprechende Abmessungen sind in der Einleitung und weiter oben angegeben.

Die Borstenkavitäten 126 bzw. der Werkzeugeinsatz 124 sind ein zentraler Bestandteil des Spritzgiesswerkzeugs. Sie können mit einem Werkzeugstahl hergestellt werden, der als kostengünstiges Material erhältlich ist.

Zur Qualitätsverbesserung können die Borstenkavitäten 126 bzw. der Werkzeugeinsatz 124 aus einem pulvermetallurgischen Stahl hergestellt werden.

Die Fertigungsverfahren der Pulvermetallurgie sind gekennzeichnet durch die mechanische Verdichtung von Metallpulvern in Formwerkzeugen oder Pressen und gleichzeitiges oder anschließendes Sintern des "Grünlings" bei hohen Temperaturen oder Warmwalzen zu einem Block. Beispielsweise eignet sich der pulvermetallurgische Stahl Microclean M390 der Firma Böhler Edelstahl GmbH & Co. KG (Microclean ist ein Markenzeichen von Böhler Edelstahl GmbH & Co. KG). Die minimierte Anzahl Materialeinschlüsse, die Korngrössen im Stahl und der regelmässige Gefügeaufbau sind bei solchen Stählen optimiert. Dadurch wird bei der Bearbeitung eine höhere Qualität der Erodierkontur erreicht, was schlussendlich zu qualitativ besseren Borsten führt.

Weisen die Borsten 34 nur einen Borstenstamm 50 auf - dieser ist durch die Borstenkavitäten 126 definiert - jedoch keine Endkappe 52, so wird die Borstenkavität 126 durch die ebene Stirnseite des Stamms des Stützelements 128 abgeschlossen.

Weisen die Borsten 34 jedoch Endkappen 52 auf, so sind die Endkappenkavitäten bevorzugt stirnseitig am Stamm des Stützelements 128 ausgebildet.

Des Weiteren dienen die Stützelemente 128 der Entlüftung des Spritzgiesswerkzeugs während des Einspritzens des Kunststoffs.

Der Vollständigkeit halber sei erwähnt, dass die Stützelemente 128 und die Werkzeugeinsätze 124 miteinander nicht fest verbunden sind. Sie liegen in der Schliessstellung des Spritzgiesswerkzeugs durch den Druck zwischen dem Aufnahmekörper 104 und dem Stützkörper 106 aneinander an. Während des Öffnungsschritts werden sie mittels der Schraubendruckfeder 132 gegeneinander verspannt, der Flanschabschnitt 130 der Borstenkavität 126 wird an den Flansch des Stützelements 128 gedrückt.

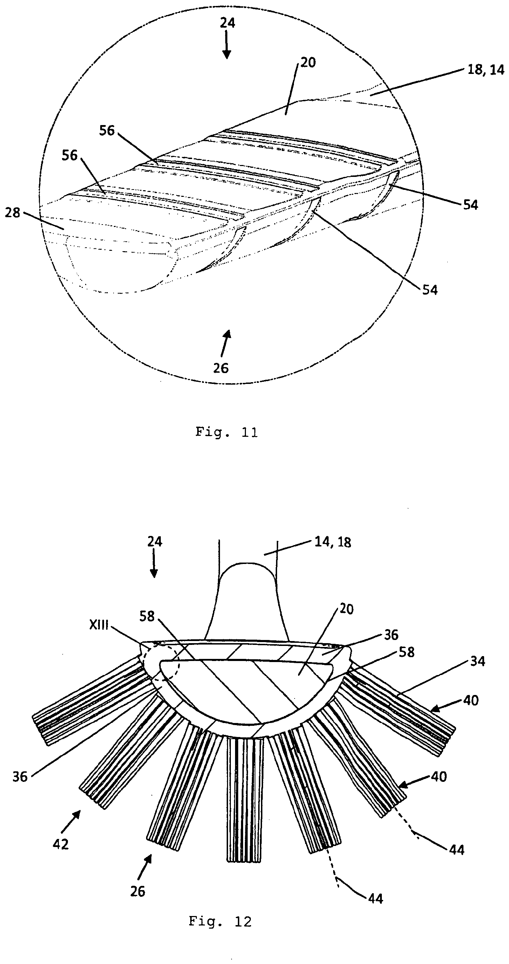

In der gezeigten Ausführungsform des Spritzgiesswerkzeugs 92 sind für die aussen liegenden je zwei Reihen 48 von Borstenbündeln 40 - siehe Figur 12 - je ein Werkzeugteil 94a und für die dazwischen angeordneten drei Reihen 48 von Borstenbündeln 40 ein weiterer Werkzeugteil 94b vorgesehen.

Weiter sind drei Werkzeugteile 94 für die Ausbildung der Borstenbündel 40 im räumlich gebogenen Endbereich 28 vorhanden. Dem mittleren 94c dieser drei letztgenannten Werkzeugteile 94 sind die Werkzeugeinsätze 24 für die Ausbildung der vier Borstenbündel 40 am freien Ende der Spülbürste 10 zugeordnet.

Zwischen dem Werkzeugteil 94c und den beiden Werkzeugteilen 94a, mittels welchen die je zwei seitlichen Reihen 48 von Borstenbündeln 40 hergestellt werden, befindet sich je ein weiteres Werkzeugteil 94d beziehungsweise 94e zur Herstellung der je fünf weiteren Borstenbündel 40 im räumlich gebogenen Endbereich 28.

Allen Werkzeugteilen 94 ist gemeinsam, dass in ihren Aufnahmekörpern 104 Werkzeugeinsätze 124 angeordnet sind, deren Längsrichtungen mindestens teilweise in einem Winkel zueinander oder windschief zueinander verlaufen.

An einem Führungskörper 134 des Spritzgiesswerkzeugs 92 sind für jeden Werkzeugteil 94 lineare Führungen 136 ausgebildet beziehungsweise angeordnet, welche beispielsweise die Form von Führungsschienen oder Führungsnuten haben können.

Im gezeigten Ausführungsbeispiel wird der Führungskörper 134 von einem Mitnahmekörper 138 durchgriffen. Der Mitnahmekörper 138 ist einerseits an einem linear bewegbaren Teil der Spritzgiessmaschine befestigt und andererseits mit den Stützkörpern 106 der Werkzeugteile 94 derart verbunden ist, dass die Stützkörper 106 sich in Bewegungsrichtung des Mitnahmekörpers 138 mit bewegen.

Der Vollständigkeit halber sei erwähnt, dass die Bewegungsrichtung B des Mitnahmekörpers 138 auf den stationären Werkzeugteil 96 zu und von diesem weg gerichtet ist; vorzugsweise rechtwinklig zur Trennebene zwischen dem stationären Werkzeugteil 96 und den in Schliessstellung des Spritzgiesswerkzeugs 92 an jenem anliegenden Werkzeugteilen 94 (d.h. 94a, 94b, 94c, 94d, 94e); in Schliessstellung des Spritzgiesswerkzeugs 92 begrenzen die Aufnahmekörper 104, zusammen mit den darin angeordneten Werkzeugeinsätzen 124, die Stützelemente 128 sowie der stationäre Werkzeugteil 96 die Kavität 98 zum Herstellen des Borstenträgers 36 und aller Borstenbündel 40 mit den gespritzten Borsten 34.

Schlussendlich weist das Spritzgiesswerkzeug 92 einen Kern 140 auf, welcher der Ausbildung des Innenraums des hülsenförmig ausgebildeten Borstenträgers 36 dient. In Schliessstellung des Spritzgiesswerkzeugs 92 ist der Kern 140 in die Kavität 98 eingefahren, wie in Figur 49 gezeigt.

Ist eine Spülbürste 10 gemäss den Figuren 1 bis 8 herzustellen, ist das Spritzgiesswerkzeug 92 genau gleich ausgebildet wie in den Figuren 49 und 50 gezeigt, wobei jedoch anstelle des Kerns 140 der Kopfbereich 20 der Handhabe 14 in die Kavität 98 eingelegt wird und allenfalls die Kavität 98 an die Handhabe 14 angepasst ist.

In Schliessstellung des Spritzgiesswerkzeug 92, welche in Figur 49 gezeigt ist, ist die Kavität 98 geschlossen. Die Werkzeugeinsätze 124 befinden sich mit ihrer inneren Stirnseite bei oder nahe bei der Fläche der betreffenden Aufnahmekörper 104, welche die Kavität 98 begrenzt. Im vom Kern 140, den Flächen der Aufnahmekörper 104 und der dem Inneren der Kavität zugewandten Stirnseite der Werkzeugeinsätze 124 begrenzten Zwischenraum wird der Borstenträger 36, und in den Borstenkavitäten 126 werden die Borsten 34 geformt.

Nachdem die Kunststoffkomponente für die Herstellung des Borstenträgers 36 und der Borsten 34 in die Kavität 98 eingespritzt worden ist und diese Kunststoffkomponente mindestens teilweise ausgehärtet ist, wird das Spritzgiesswerkzeug geöffnet. Dazu wird in einem ersten Schritt der Mitnahmekörper 138 in Richtung vom stationären Werkzeugteil 96 wegbewegt.

In einem zweiten Öffnungsschritt, welcher einen Teilhub des Öffnungshubs umfasst, beispielsweise 5 mm, werden die Stützkörper 106, jeder entlang seiner Führung 136, in Öffnungsrichtung mitgenommen, die Werkzeugeinsätze 124 bzw. die zugehörigen Borstenkavitäten 126 entformen sich strahlenartig, wogegen die Aufnahmekörper 104 durch den nicht gezeigten Mechanismus in Schliessstellung verbleiben. Die Schraubendruckfedern 132 sorgen jedoch dafür, dass sich die Werkzeugeinsätze 124 in den betreffenden Ausnehmungen 102 in Richtung aus der Kavität 98 hinaus bewegen und dass die Werkzeugeinsätze an den Stützelementen 128 anliegen. Dies führt zu einer teilweisen Entformung der gespritzten Borsten 34. Dieser Entformungsschritt passiert ohne Zwangsentformung.

Im nachfolgenden dritten Öffnungsschritt, welcher den restlichen Öffnungshub umfasst, werden auch die Aufnahmekörper 104, zusammen mit den Stützkörpern 106, je in ihren Führungen 136 in die Offenstellung des Spritzgiesswerkzeugs 92 mitgenommen. Dadurch werden die Borsten 34, welche nicht in Richtung der betreffenden Führung 136 verlaufen, oder seitlich versetzt sind, zwangsentformt. Die Elemente der jeweiligen Werkzeugteile 94 bleiben innerhalb desselben Werkzeugteils 94 relativ zueinander in derselben Position.

Schlussendlich kann der Borstenträger 36 mit den integral geformten Borsten 34 dem Spritzgiesswerkzeug 92 entnommen werden. Dazu wird der Kern 140 von der Kavität 98 weg bewegt und anschliessend wird der Borstenträger 36 vom Kern 140 abgezogen, beispielsweise mit Hilfe eines Roboters.

Ist eine Spülbürste 10 gemäss den Figuren 1 bis 8 herzustellen, kann dem geöffneten Spritzgiesswerkzeug 92 die fertige Spülbürste 10 entnommen werden.

Bei einer Spülbürste 10 gemäss den Figuren 9 bis 15 erfolgt nach dem Spritzgiessen des Borstenträgers 36 die Montage des Borstenträgers 36 mit den gespritzten Borsten 34 am Kopfbereich 20 der Handhabe 14 durch Aufschieben.

Der Ablauf des Spritzgiessprozesses für den Borstenträger 40 und die Borsten 34 passiert wie folgt:
1. Das Spritzgiesswerkzeug ist geschlossen, wie in Figur 49 dargestellt. Die Borstenkomponente (d.h. der betreffende Kunststoff) wird eingespritzt.
2. Der gespritzte Körper wird zum Abkühlen im geschlossenen Spritzgiesswerkzeug belassen.
3.Nach dem Abkühlen folgt der erste Öffnungsschritt, die beiden Werkzeugteile 94 und 96 des Spritzgiesswerkzeugs werden voneinander weg bewegt.
4.Anschliessend an den ersten Öffnungsschritt folgt der zweite Öffnungsschritt.
5.Anschliessend an den zweiten Öffnungsschritt folgt der dritte Öffnungsschritt.
6. Anschliessend wird der fertige Borstenträger 36 aus dem Spritzgiesswerkzeug entnommen.
7. Das Spritzgiesswerkzeug wird wieder geschlossen und in die Urspungskonfiguration zurück gesetzt (Figur. 49)

Der genannte Werkzeugaufbau mit Werkzeugeinsätzen 124, die die Borstenkavitäten 126 erhalten, ermöglicht einen modularen Aufbau des Spritzgiesswerkzeugs 92. Konkret kann mit relativ geringem Aufwand eine Bürste mit unterschiedlich ausgebildeten Borstenbündeln 40 geformt werden, da lediglich die Werkzeugeinsätze 124 ausgewechselt werden müssen. Diese Modularität beschränkt sich in der Grösse natürlich auf die Dimensionen des Werkzeugeinsatzes 124, lässt aber verschiedene Borstenanzahlen, Höhen, etc. zu.

Die Weiterverarbeitung des Spritzgiessprodukts, bzw. der Spülbürste nach dem Spritzgiessen kann direkt gekoppelt oder losgekoppelt passieren. Nachgelagert ist lediglich der Verpackungsprozess zu durchlaufen.

Verpackungsmässig stehen der Spülbürste verschiedenste Möglichkeiten offen. So können die Bürsten beispielsweise in einem Blister ganz- oder teilverpackt werden, es können Banderolen um das Produkt gelegt werden.

Im Fall der Kopplung der Prozesse ist die Verpackungsmaschine direkt an die Spritzgiessmaschine angebunden und die Produkte werden nach dem Spritzgiessen direkt verpackt. Dazwischen kann höchstens ein Pufferschritt angeordnet sein, der die Leistungsschwankungen auffängt. Dies bringt die Vorteile, dass das Produkt nicht separat zwischengelagert werden muss, das positionierte Teil wird positioniert weitergegeben und muss nicht neu ausgerichtet werden, der Aufwand wird durch die Reduktion der Lagerung gesenkt. Als Nachteil stehen dieser Variante die Kosten gegenüber, die Verkettung der Prozesse ist relativ aufwändig und teuer.

Falls die Schritte nicht gekoppelt sind, wird das Produkt nach dem Spritzgiessen zwischengelagert und bei Bedarf dem Verpackungsprozess zugeführt.

Die gespritzten Borsten für Haushaltsbürsten können wie gemäss Figurenbeschrieb für Spülbürsten, WC-/Toilettenbürsten, Bodenwischer/Besen, Schrubber, Nagelbürsten eingesetzt werden, die Körperpflegebürste wird als Applikator-Bürste für die Applikation von Kosmetikas (z.B. Nagellacke, Mascara), Haarpflegeprodukten (z.B. Haarfärbungen) oder von Medizinalprodukten verwendet. Daneben können auch Flaschenputzer mit dem hierin offenbarten Verfahren hergestellt werden. Selbstverständlich sind die in dieser Schrift gezeigten Ausgestaltungsvarianten beispielhaft. Im Rahmen der Erfindung können die einzelnen Ausprägungen und Elemente dieser Ausgestaltungsvarianten mit anderen Ausgestaltungsvarianten kombiniert werden ohne den Rahmen dieser Erfindung zu verlassen.

Die gemachten Beschreibungen für spezifische Figuren lassen sich selbstverständlich auch auf andere Figuren übertragen, die gleiche oder ähnliche Ausprägungen zeigen und in welchen die Ausprägungen nicht im gleichen Detail beschrieben sind.

## Patentansprüche

1. Haushaltsbürste oder Körperpflegebürste mit einer Handhabe (14) und einem von dieser getragenen Borstenfeld (42) mit, im Spritzgiessverfahren hergestellten, gespritzten Borsten (34), welche einen kreisrunden Querschnitt aufweisen und welche von einem integral mit ihnen ausgebildeten Borstenträger (36) abstehen, wobei jeweils mehrere gespritzte Borsten (34) in einem Borstenbündel (40) und die Borstenbündel (40) in einem Bündelabstand (A) zueinander angeordnet sind, wobei der Borstenträger wenigstens einigen der Borstenbündel (40), vorzugsweise allen Borstenbündeln (40) gemeinsam ist, wobei der gemeinsame Borstenträger (36) und die Handhabe (14) aneinander angespritzt sind und zumindest einen Formschluss bilden, wobei die Bürstenvorderseite (26) die Austrittsfläche des Borstenträgers aufweist, aus welchem die gespritzten Borsten (34) austreten, wobei das Borstenmaterial eine Shore D Härte von 30 bis 80 aufweist und wobei das Verhältnis von Borstenlänge zu Durchmesser am Borstenende von 20:1 bis 125:1 beträgt.

2. Haushaltsbürste oder Körperpflegebürste nach Anspruch 1, **dadurch gekennzeichnet, dass** die gespritzten Borsten (34) im Borstenbündel (40), gemessen beim Austritt aus dem Borstenträger (36), in einem gegenseitigen Abstand von 0 mm bis 1,5 mm, bevorzugt von 0 mm bis 0,8 mm angeordnet sind.

3. Haushaltsbürste oder Körperpflegebürste nach Anspruch 1, **dadurch gekennzeichnet, dass** der gemeinsame Borstenträger (36) durch die Handhabe (14) gebildet ist und die Handhabe (14) sowie die gespritzten Borsten (34) aus demselben Kunststoffmaterial bestehen.

4. Haushaltsbürste oder Körperpflegebürste nach Anspruch 1, **dadurch gekennzeichnet, dass** die Handhabe (14) einen Kopfbereich (20) und einen Griffbereich (16), sowie vorzugsweise einen Halsbereich (18) zwischen dem Kopfbereich (20) und dem Griffbereich (16), aufweist und der gemeinsame Borstenträger (36) an den Kopfbereich (20) angespritzt ist.

5. Haushaltsbürste oder Körperpflegebürste nach Anspruch 4, **dadurch gekennzeichnet, dass** die Handhabe (14) im Kopfbereich (20) wenigstens einen Durchlass (30) aufweist und der gemeinsame Borstenträger (36), in Richtung des Durchlasses (30), sich auf beiden Seiten des Kopfbereichs (20) erstreckt sowie einen durch den Durchlass (30) hindurchverlaufenden Verbindungssteg (38) aufweist.

6. Haushaltsbürste oder Körperpflegebürste nach Anspruch 1, **dadurch gekennzeichnet, dass** die Handhabe (14) einen Kopfbereich (20) und einen Griffbereich (16), sowie vorzugsweise einen Halsbereich (18) zwischen dem Kopfbereich (20) und dem Griffbereich (16), aufweist und der gemeinsame Borstenträger (36) an den Kopfbereich (20) montiert ist.

7. Haushaltsbürste oder Körperpflegebürste nach Anspruch 6, **dadurch gekennzeichnet, dass** der gemeinsame Borstenträger (36) hülsenförmig ausgebildet und auf den Kopfbereich (20) aufgesteckt ist.

8. Haushaltsbürste oder Körperpflegebürste nach einem der Ansprüche 1 bis 7, **dadurch gekennzeichnet, dass** wenigstens einige der Borstenbündel (40) einen individuellen Borstenträger (36) aufweisen und die individuellen Borstenträger (36) vom Kunststoffmaterial der Handhabe (14), vorzugsweise durch Umspritzen mit dem Kunststoffmaterial der Handhabe (14) oder durch Anspritzen an die Handhabe (14), gehalten sind.

9. Haushaltsbürste oder Körperpflegebürste nach einem der Ansprüche 1 bis 8, **dadurch gekennzeichnet, dass** die gespritzten Borsten (34) beim Austritt aus dem Borstenträger (36) einen Durchmesser (D) von 0.4 mm bis 1,2 mm, vorzugsweise 0.6 mm bis 1 mm, aufweisen.

10. Haushaltsbürste oder Körperpflegebürste nach einem der Ansprüche 1 bis 9, **dadurch gekennzeichnet, dass** die gespritzten Borsten (34) eine freie Länge (L) von 12 mm bis 25 mm, vorzugsweise von 15 mm bis 22 mm, aufweisen.

11. Haushaltsbürste oder Körperpflegebürste nach einem der Ansprüche 1 bis 10, **dadurch gekennzeichnet, dass** die gespritzten Borsten (34) einen Borstenstamm (50) aufweisen, welcher sich vom Borstenträger (36) bis zum freien Ende der gespritzten Borsten (34), oder, falls diese eine Endkappe (52) aufweisen, bis zur Endkappe (52) erstreckt, und der Borstenstamm (50), an dessen vom Borstenträger (36) abgewandten Ende einen Durchmesser (D1) von 0.2 mm bis 0.6 mm, vorzugsweise von 0.35 mm bis 0,55 mm aufweist.

12. Haushaltsbürste oder Körperpflegebürste nach Anspruch 11, **dadurch gekennzeichnet, dass** die gespritzten Borsten (34) Endkappen (52) aufweisen, deren Aussenkontur kontinuierlich an die Aussenkontur des Borstenstamms (50) anschliesst und welche vorzugsweise gerundet, insbesondere wenigstens annähernd halbkugelförmig ausgebildet sind.

13. Haushaltsbürste oder Körperpflegebürste nach einem der Ansprüche 1 bis 12, **dadurch gekennzeichnet, dass** die Borstenbündel (40) 10 bis 35, vorzugsweise 15 bis 25 gespritzte Borsten (34) aufweisen.

14. Haushaltsbürste oder Körperpflegebürste nach einem der Ansprüche 1 bis 13, **dadurch gekennzeichnet, dass** der Bündelabstand (A) 1 bis 10 mm beträgt, vorzugsweise in Längsrichtung 1 mm bis 5 mm, insbesondere 2 mm bis 3 mm, und vorzugsweise in Querrichtung 6 mm bis 8 mm.

## Claims

1. Household brush or body care brush having a handle (14) and a bristle area (42), which is carried by said handle and has injected bristles (34), which are produced by an injection moulding process, have a circular cross section and protrude from a bristle carrier (36) formed integrally therewith, wherein a plurality of injection moulded bristles (34) are arranged in each case in a bristle bundle (40) and the bristle bundles (40) are arranged in relation to one another at a bundle spacing (A), wherein the bristle carrier is common to at least some of the bristle bundles (40), preferably to all of the bristle bundles (40), wherein the common bristle carrier (36) and the handle (14) are injection moulded onto one another and form at least a form fit, wherein the brush front side (26) has the exit face of the bristle carrier from which the injected bristles (34) exit, wherein the bristle material has a Shore D hardness of 30 to 80 and wherein the ratio of the bristle length to the diameter at the bristle end amounts to 20:1 to 125:1.

2. Household brush or body care brush according to Claim 1, **characterized in that** the injected bristles (34) in the bristle bundle (40) are arranged at a mutual spacing, measured where they exit from the bristle carrier (36), of 0 mm to 1.5 mm, preferably of 0 mm to 0.8 mm.

3. Household brush or body care brush according to Claim 1, **characterized in that** the common bristle carrier (36) is formed by the handle (14), and the handle (14) and the injected bristles (34) consist of the same plastics material.

4. Household brush or body care brush according to Claim 1, **characterized in that** the handle (14) has a head region (20) and a grip region (16), as well as preferably a neck region (18) between the head region (20) and the grip region (16), and the common bristle carrier (36) is injection moulded onto the head region (20).

5. Household brush or body care brush according to Claim 4, **characterized in that** the handle (14) has at least one passage (30) in the head region (20) and, in the direction of the passage (30), the common bristle carrier (36) extends on both sides of the head region (20) and has a connecting web (38) running through the passage (30).

6. Household brush or body care brush according to Claim 1, **characterized in that** the handle (14) has a head region (20) and a grip region (16), as well as preferably a neck region (18) between the head region (20) and the grip region (16), and the common bristle carrier (36) is mounted on the head region (20).

7. Household brush or body care brush according to Claim 6, **characterized in that** the common bristle carrier (36) is in the form of a sleeve and is fitted onto the head region (20).

8. Household brush or body care brush according to one of Claims 1 to 7, **characterized in that** at least some of the bristle bundles (40) have an individual bristle carrier (36) and the individual bristle carriers (36) are held by the plastics material of the handle (14), preferably by being injection moulded around with the plastics material of the handle (14) or by being injection moulded onto the handle (14).

9. Household brush or body care brush according to one of Claims 1 to 8, **characterized in that**, where they exit from the bristle carrier (36), the injected bristles (34) have a diameter (D) of 0.4 mm to 1.2 mm, preferably 0.6 mm to 1 mm.

10. Household brush or body care brush according to one of Claims 1 to 9, **characterized in that** the injected bristles (34) have a free length (L) of 12 mm to 25 mm, preferably of 15 mm to 22 mm.

11. Household brush or body care brush according to one of Claims 1 to 10, **characterized in that** the injected bristles (34) have a bristle stem (50), which extends from the bristle carrier (36) up to the free end of the injected bristles (34) or, if said bristles have an end cap (52), up to the end cap (52), and the bristle stem (50) has, at its end facing away from the bristle carrier (36), a diameter (D1) of 0.2 mm to 0.6 mm, preferably of 0.35 mm to 0.55 mm.

12. Household brush or body care brush according to Claim 11, **characterized in that** the injected bristles (34) have end caps (52), the outer contour of which continuously adjoins the outer contour of the bristle stem (50) and which are preferably of a rounded, in particular at least approximately hemispherical, form.

13. Household brush or body care brush according to one of Claims 1 to 12, **characterized in that** the bristle bundles (40) have 10 to 35, preferably 15 to 25, injected bristles (34).

14. Household brush or body care brush according to one of Claims 1 to 13, **characterized in that** the bundle spacing (A) amounts to 1 to 10 mm, in the longitudinal direction preferably 1 mm to 5 mm, in particular 2 mm to 3 mm, and in the transverse direction preferably 6 mm to 8 mm.

## Revendications

1. Brosse à usage domestique ou brosse pour soins corporels comprenant un manche (14) et une zone de poils (42) portée par celui-ci, avec des poils (34) moulés par injection, fabriqués suivant un procédé de moulage par injection, qui présentent une section transversale circulaire et qui sortent d'un support de poils (36) réalisé intégralement avec ceux-ci, à chaque fois plusieurs poils moulés par injection (34) étant disposés en un faisceau de poils (40) et les faisceaux de poils (40) étant disposés à une distance de faisceau (A) les uns des autres, le support de poils étant commun à au moins certains des faisceaux de poils (40), de préférence à la totalité des faisceaux de poils (40), le support de poils commun (36) et le manche (14) étant moulés l'un sur l'autre et formant au moins un engagement par correspondance de formes, le côté avant de la brosse (26) présentant la surface de sortie du support de poils duquel sortent les poils moulés par injection (34), le matériau des poils présentant une dureté Shore D de 30 à 80 et le rapport de la longueur des poils au diamètre à l'extrémité des poils étant de 20:1 à 125:1.

2. Brosse à usage domestique ou brosse pour soins corporels selon la revendication 1, **caractérisée en ce que** les poils moulés par injection (34) dans le faisceau de poils (40), mesuré à la sortie du support de poils (36), sont disposés à une distance mutuelle de 0 mm à 1,5 mm, de préférence de 0 mm à 0,8 mm.

3. Brosse à usage domestique ou brosse pour soins corporels selon la revendication 1, **caractérisée en ce que** le support de poils (36) commun est formé par le manche (14) et le manche (14) ainsi que les poils moulés par injection (34) sont constitués du même matériau en plastique.

4. Brosse à usage domestique ou brosse pour soins corporels selon la revendication 1, **caractérisée en ce que** le manche (14) présente une région de tête (20) et une région de poignée (16), et de préférence une région de col (18) entre la région de tête (20) et la région de poignée (16), et le support de poils commun (36) est surmoulé par injection sur la région de tête (20).

5. Brosse à usage domestique ou brosse pour soins corporels selon la revendication 4, **caractérisée en ce que** le manche (14) présente, dans la région de tête (20), au moins un passage (30) et le support de poils commun (36), dans la région du passage (30), s'étend des deux côtés de la région de tête (20) et présente une nervure de liaison (38) s'étendant à travers le passage (30).

6. Brosse à usage domestique ou brosse pour soins corporels selon la revendication 1, **caractérisée en ce que** le manche (14) présente une région de tête (20) et une région de poignée (16), ainsi que de préférence une région de col (18) entre la région de tête (20) et la région de poignée (16) et le support de poils commun (36) est monté sur la région de tête (20).

7. Brosse à usage domestique ou brosse pour soins corporels selon la revendication 6, **caractérisée en ce que** le support de poils commun (36) est réalisé en forme de douille et est enfiché sur la région de tête (20).

8. Brosse à usage domestique ou brosse pour soins corporels selon l'une quelconque des revendications 1 à 7, **caractérisée en ce qu'**au moins certains des faisceaux de poils (40) présentent un support de poils individuel (36) et les supports de poils individuels (36) sont retenus par le matériau en plastique du manche (14), de préférence par encapsulage avec le matériau en plastique du manche (14) ou par surmoulage par injection sur le manche (14).

9. Brosse à usage domestique ou brosse pour soins corporels selon l'une quelconque des revendications 1 à 8, **caractérisée en ce que** les poils moulés par injection (34) présentent, à la sortie du support de poils (36), un diamètre (D) de 0,4 mm à 1,2 mm, de préférence de 0,6 mm à 1 mm.

10. Brosse à usage domestique ou brosse pour soins corporels selon l'une quelconque des revendications 1 à 9, **caractérisée en ce que** les poils moulés par injection (34) présentent une longueur libre (L) de 12 mm à 25 mm, de préférence de 15 mm à 22 mm.

11. Brosse à usage domestique ou brosse pour soins corporels selon l'une quelconque des revendications 1 à 10, **caractérisée en ce que** les poils moulés par injection (34) présentent un tronc de poil (50) qui s'étend depuis le support de poils (36) jusqu'à l'extrémité libre des poils moulés par injection (34), ou, si ceux-ci présentent un bout d'extrémité (52), jusqu'au bout d'extrémité (52), et le tronc de poil (50) au niveau de son extrémité opposée au support de poils (36), présente un diamètre (D1) de 0,2 mm à 0,6 mm, de préférence de 0,35 mm à 0,55 mm.

12. Brosse à usage domestique ou brosse pour soins corporels selon la revendication 11, **caractérisée en ce que** les poils moulés par injection (34) présentent des bouts d'extrémité (52) dont le contour extérieur se raccorde en continu au contour extérieur du tronc de poil (50) et qui sont réalisés de préférence sous forme arrondie, en particulier sous forme au moins approximativement hémisphérique.

13. Brosse à usage domestique ou brosse pour soins corporels selon l'une quelconque des revendications 1 à 12, **caractérisée en ce que** les faisceaux de poils (40) présentent 10 à 35, de préférence 15 à 25 poils moulés par injection (34) .

14. Brosse à usage domestique ou brosse pour soins corporels selon l'une quelconque des revendications 1 à 13, **caractérisée en ce que** la distance de faisceau (A) est de 1 à 10 mm, de préférence dans la direction longitudinale de 1 mm à 5 mm, en particulier de 2 mm à 3 mm, et de préférence dans la direction transversale de 6 mm à 8 mm.
